(19) Europäisches Patentamt / European Patent Office / Office européen des brevets

(11) **EP 3 657 079 B1**

(12) **EUROPÄISCHE PATENTSCHRIFT**

(45) Veröffentlichungstag und Bekanntmachung des Hinweises auf die Patenterteilung:
**10.11.2021  Patentblatt 2021/45**

(51) Int Cl.:
*F24D 19/10* *(2006.01)*      *F24D 3/14* *(2006.01)*

(21) Anmeldenummer: **19196098.8**

(22) Anmeldetag: **09.09.2019**

(54) **VERFAHREN ZUR REGELUNG VON VOLUMENSTRÖMEN EINER FLÜSSIGKEIT IN FLÜSSIGKEITS-ROHRLEITUNGEN VON HEIZKREISEN EINES HEIZ- UND/ODER KÜHLSYSTEMS UND VORRICHTUNG ZUR DURCHFÜHRUNG DES VERFAHRENS**

METHOD FOR REGULATING FLOW RATES OF A LIQUID IN LIQUID PIPELINES OF HEATING CIRCUITS OF A HEATING AND / OR COOLING SYSTEM AND DEVICE FOR CARRYING OUT SAID METHOD

PROCÉDÉ DE RÉGULATION DES FLUX VOLUMIQUES D'UN LIQUIDE DANS DES CONDUITES DE LIQUIDE, DES CIRCUITS DE CHAUFFAGE D'UN SYSTÈME DE CHAUFFAGE ET / OU DE REFROIDISSEMENT ET DISPOSITIF DE MISE EN OEUVRE DUDIT PROCÉDÉ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **23.11.2018  DE 102018129617**

(43) Veröffentlichungstag der Anmeldung:
**27.05.2020  Patentblatt 2020/22**

(73) Patentinhaber: **SBK Siegfried Böhnisch Kunststofftechnik GmbH 74632 Neuenstein (DE)**

(72) Erfinder: **Böhnisch, Andreas A. 74613 Öhringen (DE)**

(74) Vertreter: **Truckenmüller, Frank Geitz Truckenmüller Lucht Christ Patentanwälte PartGmbB Kirchheimer Straße 60 70619 Stuttgart (DE)**

(56) Entgegenhaltungen:
**EP-A1- 2 871 539      EP-A1- 2 960 587 WO-A1-2005/098318      WO-A1-2018/162679**

**Beschreibung**

Die Erfindung betrifft ein Verfahren zur Regelung von Volumenströmen einer Flüssigkeit in Flüssigkeits-Rohrleitungen von Heizkreisen eines Heiz- und/oder Kühlsystems und eine Vorrichtung zur Durchführung des Verfahrens.

Stand der Technik

Ein Fußboden-Heizsystem besteht heute im Wesentlichen aus den folgenden Komponenten:

-   Außentemperaturgeführter Wärmeerzeuger mit Umwälzpumpe
-   Raumtemperaturregler mit integriertem Raumtemperaturfühler
-   Heizkreisverteiler (Vorlauf-Verteiler und Rücklauf-Verteiler)
-   Stellantriebe pro Heizkreis
-   Drosselventile pro Heizkreis
-   Rohrleitungen beispielsweise in einem Fußboden, in einer Wand, in einer Decke oder im Erdreich verlegt.

Ein derartiges Fußboden-Heizsystem funktioniert wie folgt: Das mittels des Wärmeerzeugers erzeugte und mittels der Umwälzpumpe in Umlauf gebrachte, erwärmte Wasser zirkuliert durch eine im Fußboden eines Raums verlegte Rohrleitung eines Heizkreises. Ist die Temperatur des Wassers höher als die des Fußbodens, wird Wärme an den Fußboden abgegeben. Dadurch entsteht eine Ist-Temperatur-Differenz (ΔT-Ist) zwischen der Temperatur des in die betroffene Rohrleitung einströmenden Wassers und der Temperatur des aus dieser Rohrleitung ausströmenden Wassers (Vorlauf-Rücklauf).

Zur Raumtemperaturregelung einer solchen Fußbodenheizung ist in dem betroffenen Raum ein Raumtemperatur-Regler (Thermostat) mit einem integrierten Raumtemperaturfühler montiert und über Elektrokabel oder Funkmodul mit einem Stellantrieb verbunden. Letzterer ist an bzw. auf einem Heizkreisverteiler (Vorlauf-Verteiler) montiert. Wird nun von dem Raumtemperatur-Regler Wärme angefordert, wird der betroffene Stellantrieb mit Spannung beaufschlagt und öffnet das Vorlauf-Ventil des betroffenen Heizkreises komplett. Erwärmtes Wasser durchströmt den Heizkreis wodurch der Raum erwärmt wird. Ist die vom dem Raumtemperatur-Regler vorgegebene Soll-Temperatur im Raum erreicht, unterbricht der Raumtemperatur-Regler die Spannungsversorgung des Stellantriebs, wodurch das mit diesem gekoppelte Vorlauf-Ventil komplett schließt. Sinkt in dem Raum die Temperatur, wird der betroffene Stellantrieb über den Raumtemperatur-Regler erneut angesteuert. Sind in einem Raum mehrere Heizkreise (über eine entsprechende Anzahl Stellantriebe) an den in diesem Raum angebrachten Raumtemperatur-Regler angeschlossen, werden alle betroffenen Vorlauf-Ventile von den zugeordneten Stellantrieben komplett geöffnet. Diese Heizkreise sind in der Regel unterschiedlich lang und haben somit auch unterschiedliche Druckverluste. Kürzere Heizkreise werden somit schneller warm und überheizen, längere Heizkreise erreichen die vorgegebene Temperatur langsamer oder gar nicht. Um dies zu vermeiden, werden bislang in den einzelnen Heizkreisen Drossel-Ventile für einen hydraulischen Abgleich eingesetzt über die der Wasser-Volumenstrom gedrosselt und eventuell auch angezeigt wird (Durchflussmesser). Hierbei handelt es sich um ein statisches System. Wenn einzelne Heizkreise eines Fußbodenheizungs-Verteilers geschlossen werden/sind, erhalten die restlichen, geöffneten Heizkreise den überschüssigen Volumenstrom des erwärmten Wassers und könnten so überheizen. Dieser Effekt lässt sich zum Teil durch den Einsatz elektronisch geregelter Pumpen verringern. Weiter gibt es dynamische Drosselventile, die über den Differenzdruck den vorab eingestellten Volumenstrom eines Heizkreises konstant halten. Diese reagieren aber sehr empfindlich auf Schmutzpartikel im Heizungswasser.

Weitere Nachteile des Standes der Technik:

•   Der Volumenstrom des einzelnen Heizkreises wird begrenzt.
•   Der dazugehörige Stellantrieb öffnet/schließt immer komplett.
•   Aufwendiges Abgleichen der Volumenströme innerhalb eines Heizkreisverteilers.
•   Abgleich gilt nur für statisches System
•   Heizkreise beeinflussen sich gegenseitig
•   Raumtemperaturregler und Raumtemperaturfühler zwingend notwendig.
•   Raumtemperaturregler reagiert verzögert auf die Fußbodenoberflächentemperatur.

Aus der WO 2018/162679 A1 ist ein Verfahren zum Betreiben einer Heizungsanlage bekannt geworden.

Aus der EP 2 871 539 A1 ist ein Diagnoseverfahren zur Diagnose der korrekten Funktion eines Heizungs- und/oder Kühlsystems bekannt geworden, bei dem ein Vergleich einer Ist-Temperatur-Differenz mit einer gewünschten Soll-Temperatur-Differenz vorgenommen wird. Diese Druckschrift scheint die Merkmale des Oberbegriffs des Anspruches 1 implizit zu offenbaren. Dort ist jedoch nicht offenbart, wie dieser Vergleich vonstattengeht.

Aufgabe

Es ist eine Aufgabe der Erfindung, die Nachteile des Standes der Technik zu vermeiden. Insbesondere ist es eine Aufgabe der Erfindung, ein Verfahren und eine Vorrichtung der eingangs genannten Art zur Verfügung zu stellen, mit dem bzw. mit der vorteilhafte Möglichkeiten für einen automatischen hydraulischen Abgleich geschaffen werden, mit dem bzw. mit der eine Einstellung und ein Absperren eines Volumenstroms der Flüssigkeit in dem jeweiligen Heizkreis voneinander getrennt durchführbar ist, bei dem bzw. bei der sich die Heizkreise nicht gegenseitig beeinflussen, das bzw. die auch ohne einen Raumtemperaturthermostat durchführbar bzw. betreibbar ist und mit dem bzw. mit der bei außentemperaturgeregelten Wärmeerzeugern vorteilhafte Möglichkeiten für eine automatische Nachführung der jeweiligen Rücklauftemperatur geschaffen werden.

## Erfindung

Diese Aufgabe wird durch die Merkmale der Ansprüche 1 und 4 gelöst. Demgemäß betrifft die Erfindung ein Verfahren zur Regelung von Volumenströmen einer Flüssigkeit, insbesondere Wasser mit oder ohne Zusätzen wie Glykol, in mehreren Flüssigkeits-Rohrleitungen von Heizkreisen eines Heiz- und/oder Kühlsystems, insbesondere eines Gebäudes, einer Gebäudeeinheit oder eines Einzelraums, beispielsweise einer Fußbodenheizung, oder einer Geothermieanlage, das einen Vorlauf, einen Vorlauf-Verteiler, einen Rücklauf und einen Rücklauf-Verteiler umfasst, wobei der Vorlauf-Verteiler einen Vorlauf-Hauptkanal und mehrere in diesen mündende Vorlauf-Abzweigkanäle aufweist, an die jeweils mit ihrem ersten Rohrleitungsende eine Flüssigkeits-Rohrleitung eines Heizkreises der Heizkreise angeschlossen ist, die jeweils mit ihrem zweiten Rohrleitungsende an einen Rücklauf-Abzweigkanal einer Anzahl von mehreren Rücklauf-Abzweigkanälen des Rücklauf-Verteilers angeschlossen sind, der einen Rücklauf-Hauptkanal aufweist, in den die Rücklauf-Abzweigkanäle münden, und wobei jeder Flüssigkeits-Rohrleitung des jeweiligen Heizkreises ein Ventil zugeordnet ist, das mit Hilfe eines damit gekoppelten, vorzugsweise elektrischen, beispielsweise als elektrischer Stellmotor gestalteten, Stellantriebs (=Stellglied) in eine erste Öffnungsstellung überführbar ist, in welcher die Flüssigkeit mit einem maximalen Volumenstrom durch die betroffene Flüssigkeits-Rohrleitung strömen kann oder strömt, und in eine Schließstellung überführbar ist, in welcher die betroffene Flüssigkeits-Rohrleitung gegen ein Durchströmen der Flüssigkeit abgesperrt ist, und wobei der Stellantrieb mittels wenigstens eines, vorzugsweise elektronischen, Reglers abhängig von einer mittels wenigstens eines Temperaturfühlers erfassten Temperatur derart gesteuert wird, dass eine Änderung des Volumenstroms der Flüssigkeit durch die betroffene Flüssigkeits-Rohrleitung des betroffenen Heizkreises erreicht wird, wobei der Regler mit einem an oder in dem Vorlauf-Hauptkanal des Vorlauf-Verteilers angeordneten Vorlauf-Temperaturfühler zur Erfassung einer Vorlauf-Temperatur (T-VL) und mit einer Anzahl an Rücklauf-Temperaturfühlern zur Erfassung jeweils einer Rücklauf-Temperatur (T-RL [i]) gekoppelt ist, von denen jeweils ein Rücklauf-Temperaturfühler an oder in einem Rücklauf-Abzweigkanal der Rücklauf-Abzweigkanäle des Rücklauf-Verteilers, vorzugsweise in der Nähe des Rücklauf-Verteilers bzw. kurz vor dem Rücklauf-Verteiler, angeordnet ist, und wobei eine der Anzahl an Rücklauf-Abzweigkanälen entsprechende Anzahl von Rücklauf-Temperaturfühlern vorgesehen ist, die jeweils mit dem Regler gekoppelt sind, und dass mittels des Reglers jeweils eine Ist-Temperatur-Differenz (ΔT-Ist [i]) (=Regelgröße) der mittels des Vorlauf-Temperaturfühlers erfassten Vorlauf-Temperatur (T-VL) und der mittels des jeweiligen Rücklauf-Temperaturfühlers erfassten Rücklauf-Temperatur (T-RL [i]) berechnet wird und jeweils diese Ist-Temperatur-Differenz (ΔT-Ist [i]) mit einer gewünschten, insbesondere aus einer Norm-Heizlast-Berechnung nach DIN EN 12831 oder einer entsprechenden gesetzlichen Norm ermittelten oder berechneten Soll-Temperatur-Differenz (ΔT-Soll [i]) (=Führungsgröße) verglichen wird, indem mittels des Reglers eine Temperatur-Differenz (ΔT [i]) (=Regelabweichung) der Ist-Temperatur-Differenz (ΔT-Ist [i]) und der Soll-Temperatur-Differenz (ΔT-Soll [i]) berechnet wird, wobei mittels des Reglers, insbesondere kontinuierlich oder in bestimmten Zeitabständen oder in regelmäßigen Zeitabständen, erfasst wird, ob der Wert der Temperatur-Differenz (ΔT [i]) gleich null oder ungleich null wird, also positiv oder negativ wird, wobei der Regler dann, wenn der Wert der berechneten Temperatur-Differenz (ΔT [i]) ungleich null wird, also positiv oder negativ wird, denjenigen Stellantrieb, der dem betroffenen Heizkreis zugeordnet ist, entweder gleichzeitig oder quasi gleichzeitig oder eine einstellbare Zeit später oder eine voreingestellte Zeit später einschaltet, wodurch das mit diesem Stellantrieb gekoppelte Ventil mittels dieses Stellantriebs entweder in die erste Öffnungsstellung überführt wird oder in eine zweite Öffnungsstellung überführt wird, so dass dann ein im Vergleich zu dem Volumenstrom der Flüssigkeit durch die betroffene Flüssigkeits-Rohrleitung unmittelbar vor dem Einschalten des Stellantriebs größerer Volumenstrom der Flüssigkeit durch die betroffene Flüssigkeits-Rohrleitung des betroffenen Heizkreises strömt, wobei der Regler den betroffenen Stellantrieb erst dann wieder ausschaltet, wenn der Wert der berechneten Temperatur-Differenz (ΔT [i]) wieder null beträgt (also ΔT-Ist [i] = ΔT-Soll [i]), wodurch das mit diesem Stellantrieb gekoppelte Ventil entweder in eine dritte Öffnungsstellung überführt wird, in welcher ein kleinerer Volumenstrom der Flüssigkeit durch die betroffene Flüssigkeits-Rohrleitung des betroffenen Heizkreises strömt oder in die Schließstellung überführt wird, in welcher die betroffene Flüssigkeits-Rohrleitung gegen ein Durchströmen der Flüssigkeit abgesperrt ist, und wobei dann, wenn der Wert der Ist-Temperatur-Differenz (ΔT-Ist [i]) kleiner als null wird, also negativ wird, über einen einstellbaren oder voreingestellten Zeitraum erfasst wird, ob der Wert der Ist-Temperatur-Differenz (ΔT-Ist [i]) kleiner als null bleibt, also negativ bleibt, und wenn dies der Fall ist, mittels des Reglers die Temperatur-Differenz (ΔT [i]) mit dem Wert -1 multipliziert wird, wodurch der dem betroffenen Heizkreis zugeordnete Stellantrieb, vorzugsweise von dem Regler, eingeschaltet wird, wodurch das mit diesem Stellantrieb gekoppelte Ventil mittels dieses Stellantriebs entweder in die erste Öffnungsstellung überführt wird oder in die zweite Öffnungsstellung überführt wird, so dass dann ein im Vergleich zu dem Volumenstrom der Flüssigkeit durch die betroffene Flüssigkeits-Rohrleitung unmittelbar vor dem Einschalten des Stellantriebs größerer Volumenstrom der Flüssigkeit durch die betroffene Flüssigkeits-Rohrleitung des betroffenen Heizkreises strömt.

Diese Variante kann im Kühlbetrieb eingesetzt werden. Anders ausgedrückt kann der Regler denjenigen Stellantrieb, der dem betroffenen Heizkreis zugeordnet ist, eine einstellbare Zeit später einschalten oder eine voreingestellte Zeit später einschalten, wenn ein Kühlbetrieb eingestellt ist, also wenn von der Flüssigkeits-Rohrleitung des betroffenen Heizkreises, die einem abzukühlenden bzw. zu entwärmenden Objekt oder Raum zugeordnet ist bzw. wenn von der in dieser Flüssigkeits-Rohrleitung befindlichen Flüssigkeit, Wärme von diesem Objekt oder von diesem Raum aufgenommen werden soll. Dies wird dadurch erreicht, dass sobald der Wert der berechneten Ist-Temperatur-Differenz ($\Delta$T-Ist [i]) kleiner als null wird, also negativ wird, über einen bestimmten Zeitraum erfasst wird, ob die Ist-Temperatur-Differenz ($\Delta$T-Ist [i]) kleiner als null bleibt, also negativ bleibt, und dass, sobald dies der Fall ist, die Temperatur-Differenz ($\Delta$T [i]), vorzugsweise von dem Regler, mit dem Wert -1 multipliziert wird, so dass dadurch eine Temperatur-Differenz ($\Delta$T [i]) größer als null, also eine positive Temperatur-Differenz ($\Delta$T [i]), erzeugt bzw. gebildet wird, wodurch der dem betroffenen Heizkreis zugeordnete Stellantrieb eingeschaltet und dadurch das mit diesem Stellantrieb gekoppelte Ventil mittels dieses Stellantriebs in eine Öffnungsstellung überführt wird, in welcher ein größerer Volumenstrom der Flüssigkeit durch die betroffene Flüssigkeits-Rohrleitung des betroffenen Heizkreises der Heizkreise strömt.

Gemäß einer vorteilhaften Verfahrensvariante kann vorgesehen sein, dass dann, wenn der Wert der berechneten Temperatur-Differenz ($\Delta$T [i]) größer als null wird, also positiv wird, der Regler gleichzeitig oder quasi gleichzeitig den Stellantrieb einschaltet, der dem betroffenen Heizkreis zugeordnet ist, wodurch das mit diesem Stellantrieb gekoppelte Ventil mittels dieses Stellantriebs entweder in die erste Öffnungsstellung überführt wird oder in die zweite Öffnungsstellung überführt wird, so dass dann ein im Vergleich zu dem Volumenstrom der Flüssigkeit durch die betroffene Flüssigkeits-Rohrleitung unmittelbar vor dem Einschalten des Stellantriebs größerer Volumenstrom der Flüssigkeit durch die betroffene Flüssigkeits-Rohrleitung des betroffenen Heizkreises strömt. Diese Variante kann im Heizbetrieb eingesetzt werden. Anders ausgedrückt kann der Regler denjenigen Stellantrieb, der dem betroffenen Heizkreis zugeordnet ist, gleichzeitig oder quasi gleichzeitig einschalten, wenn ein Heizbetrieb eingestellt ist, also wenn von der Flüssigkeits-Rohrleitung des betroffenen Heizkreises, die einem zu erwärmenden Objekt oder Raum zugeordnet ist, bzw. wenn von der in dieser Flüssigkeits-Rohrleitung befindlichen Flüssigkeit, Wärme an dieses Objekt oder an diesen Raum abgegeben werden soll.

Üblicherweise kann die Flüssigkeit mittels eines Wärmeerzeugers erwärmt werden, um einem Objekt oder Raum über den jeweiligen Heizkreis thermische Energie zuzuführen (Heizung). Zusätzlich oder alternativ kann vorgesehen sein, dass die Flüssigkeit mittels einer Kühleinrichtung abgekühlt bzw. entwärmt wird, um einem bzw. dem Objekt oder einem bzw. dem Raum über den jeweiligen Heizkreis thermische Energie zu entziehen (Kühlung bzw. Entwärmung).

Bei jedem Heizkreis im Sinne dieses Schutzrechts handelt es sich um ein geschlossenes Rohr-System aus einer Anordnung mehrerer, miteinander flüssigkeitsverbundener Flüssigkeits-Rohrleitungen, durch welche die Flüssigkeit in einem Kreislauf strömen kann oder strömt. Dabei ist jeder Heizkreis jeweils einer Flüssigkeits-Rohrleitung zugeordnet, die zwischen einem Vorlauf-Abzweigkanal der Vorlauf-Abzweigkanäle des Vorlauf-Verteilers und einem Rücklauf-Abzweigkanal der Rücklauf-Abzweigkanäle des Rücklauf-Verteilers angeschlossen ist, wobei die jeweilige Flüssigkeits-Rohrleitung an ihrem ersten Rohrleitungsende in den betroffenen Vorlauf-Abzweigkanal mündet und an ihrem zweiten Rohrleitungsende in den betroffenen Rücklauf-Abzweigkanal mündet.

Gemäß einer vorteilhaften Weiterbildung kann vorgesehen sein, dass die Vorlauf-Temperatur (T-VL) mittels des Vorlauf-Temperaturfühlers und die jeweilige Rücklauf-Temperatur (T-RL [i]) mittels des jeweiligen Rücklauf-Temperaturfühlers in bestimmten festgelegten Zeitabständen, vorzugsweise gleichzeitig, erfasst werden.

Die Erfindung betrifft auch eine Vorrichtung zur Durchführung des erfindungsgemäßen Verfahrens, umfassend einen Vorlauf-Verteiler und einen Rücklauf-Verteiler für ein Heiz- und/oder Kühlsystem oder eines Heiz- und/oder Kühlsystems, wobei der Vorlauf-Verteiler einen Vorlauf-Hauptkanal und mehrere in diesen mündende Vorlauf-Abzweigkanäle aufweist, an die jeweils mit ihrem ersten Rohrleitungsende eine Flüssigkeits-Rohrleitung eines Heizkreises der Heizkreise angeschlossen ist, die jeweils mit ihrem zweiten Rohrleitungsende an einen Rücklauf-Abzweigkanal einer Anzahl von mehreren Rücklauf-Abzweigkanälen des Rücklauf-Verteilers angeschlossen sind, der einen Rücklauf-Hauptkanal aufweist, in den die Rücklauf-Abzweigkanäle münden, und wobei jeder Flüssigkeits-Rohrleitung des jeweiligen Heizkreises ein Ventil zugeordnet ist, das mit Hilfe eines damit gekoppelten, vorzugsweise elektrischen, beispielsweise als elektrischer Stellmotor gestalteten, Stellantriebs in eine erste Öffnungsstellung überführbar ist, in welcher eine Flüssigkeit, vorzugsweise mit einem maximalen Volumenstrom, durch die betroffene Flüssigkeits-Rohrleitung strömen kann oder strömt, und in eine Schließstellung überführbar ist, in welcher die betroffene Flüssigkeits-Rohrleitung gegen ein Durchströmen der Flüssigkeit abgesperrt ist, und umfassend wenigstens einen Temperaturfühler und wenigstens einen, vorzugsweise elektronischen, Regler zur Steuerung des jeweiligen Stellantriebs abhängig von einer mittels des wenigstens einen Temperaturfühlers erfassten Temperatur, um mittels des jeweiligen Stellantriebs das mit diesem gekoppelte Ventil derart zu betätigen, dass eine Änderung eines Volumenstroms der Flüssigkeit, insbesondere Wasser mit oder ohne Zusätzen wie Glykol, durch die betroffene Flüssigkeits-Rohrleitung bewirkbar ist, und wobei der Regler mit einem an oder in dem Vorlauf-Hauptkanal des Vorlauf-Verteilers angeordneten Vorlauf-Temperaturfühler zur Erfassung einer Vorlauf-Temperatur (T-VL) und mit einer Anzahl von mehreren Rücklauf-Temperaturfühlern zur Erfassung jeweils einer Rücklauf-Temperatur (T-RL [i]) gekoppelt ist, von denen jeweils ein Rücklauf-Temperaturfühler an oder in einem Rücklauf-Abzweigkanal der Rücklauf-Abzweigkanäle des Rücklauf-Verteilers angeordnet ist, wobei die Anzahl der Rücklauf-Temperaturfühler der Anzahl der Rücklauf-Abzweigkanäle entspricht, und wobei es sich bei dem Regler um einen Regler zur Regelung einer Öffnungsstellung des betroffenen Vorlauf-Ventils und folglich zur Regelung eines Volumenstroms einer Flüssigkeit, insbesondere Wasser mit oder ohne Zusätzen wie Glykol, durch den betroffenen Vorlauf-Abzweigkanal dieses Heizkreises, bzw. durch die zugeordnete Flüssigkeits-Rohrleitung dieses Heizkreises, abhängig von dem Wert oder Absolutwert (Betrag) einer Temperatur-Differenz ($\Delta$T [i]) zwischen einer Ist-Temperatur-Differenz ($\Delta$T-Ist [i]) zwischen der mittels des Vorlauf-Temperaturfühlers erfassten Vorlauf-Temperatur (T-VL) und der jeweils mittels des jeweiligen Rücklauf-Temperaturfühlers erfassten Rücklauf-Temperatur (T-RL [i]) und einer gewünschten, insbesondere aus einer Norm-Heizlast-Berechnung nach DIN EN 12831 oder einer entsprechenden gesetzlichen Norm ermittelten oder berechneten, Soll-Temperatur-Differenz (AT-Soll [i]) handelt oder eines Quotienten (Q [i]) einer Ist-Temperatur-Differenz ($\Delta$T-Ist [i]) zwischen der mittels des Vorlauf-Temperaturfühlers erfassten Vorlauf-Temperatur (T-VL) und der jeweils mittels des jeweiligen Rücklauf-Temperaturfühlers erfassten Rücklauf-Temperatur (T-RL [i]) und einer gewünschten, insbesondere aus einer Norm-Heizlast-Berechnung nach DIN EN 12831 oder einer entsprechenden gesetzlichen Norm ermittelten oder berechneten, Soll-Temperatur-Differenz (AT-Soll [i]) handelt, wobei der Regler konfiguriert ist, das Verfahren nach einem der vorstehenden Ansprüche auszuführen.

Bei dem erfindungsgemäßen Verfahren und/oder bei der erfindungsgemäßen Vorrichtung kann vorgesehen sein, dass es sich bei dem Regler um einen softwarebasierten digitalen Regler handelt. Ganz besonders bevorzugt dient der Regler zur bedarfsgerechten Ansteuerung des jeweiligen Stellantriebs, zur Messdatenerfassung und zur Systemüberwachung.

Bei dem erfindungsgemäßen Verfahren und/oder bei der erfindungsgemäßen Vorrichtung kann vorgesehen sein, dass der Regler ein programmierbarer oder programmierter Microcontroller ist, vorzugsweise wobei der Regler mit einer der Anzahl von Stellantrieben und/oder Ventilen entsprechenden Anzahl an Potentiometern zur Einstellung der jeweiligen Soll-Temperatur-Differenz (AT-Soll [i]) gekoppelt sein kann. Dies ermöglicht eine große Flexibilität und eine große Bandbreite an Einsatzmöglichkeiten.

Dabei kann vorteilhaft vorgesehen sein, dass der Microcontroller mit einem, vorzugsweise als Binärschalter ausgebildeten, Schalter oder mit einem in zwei oder mehr Stellungen rastbaren Potentiometer, zur Einstellung einer aus der Norm-Heizlast-Berechnung ermittelten oder berechneten Vorlauf-Auslegungs-Temperatur (AT-VL) gekoppelt ist. Dies ermöglicht besonders vorteilhafte Möglichkeiten zur Anpassung bzw. zur Einstellung der Vorlauf-Auslegungs-Temperatur (AT-VL).

Ferner kann bei dem erfindungsgemäßen Verfahren und/oder bei der erfindungsgemäßen Vorrichtung vorteilhaft vorgesehen sein, dass der Microcontroller und die Potentiometer auf einer gemeinsamen Platine angeordnet sind. Dies ermöglicht Handhabungs- und Kostenvorteile.

Bei dem erfindungsgemäßen Verfahren und/oder bei der erfindungsgemäßen Vorrichtung kann gemäß einer ersten Alternative vorgesehen sein, dass jedes Ventil als ein Vorlauf-Ventil entweder dem Vorlauf-Abzweigkanal zugeordnet ist oder im Bereich des Vorlauf-Abzweigkanals angeordnet ist, der mittels des jeweils zugeordneten Vorlauf-Ventils öffenbar und wieder verschließbar ist. Dadurch lassen sich Montage- bzw. Demontagevorteile erzielen und die Ventile können, falls erforderlich, einfach ausgetauscht werden. Es versteht sich, dass bei dieser ersten Alternative jedem Rücklauf-Kanal ein Rücklauf-Ventil zugeordnet sein kann, mittels dessen der jeweilige Rücklauf-Kanal öffenbar und wieder verschließbar ist. Dies ermöglicht es, beispielweise ein Rücklauf-Ventil der Rücklauf-Ventile zu schließen, so dass dann die zugeordnete Flüssigkeits-Rohrleitung des zugeordneten Heizkreises gegen ein Durchströmen der Flüssigkeit abgesperrt ist, während die anderen Flüssigkeits-Rohrleitungen von der Flüssigkeit zum Zwecke eines Entlüftens durchströmt werden.

Bei dem erfindungsgemäßen Verfahren und/oder bei der erfindungsgemäßen Vorrichtung kann gemäß einer zweiten Alternative vorgesehen sein, dass jedes Ventil als ein Rücklauf-Ventil entweder dem Rücklauf-Abzweigkanal zugeordnet ist oder im Bereich des Rücklauf-Abzweigkanals angeordnet ist, der mittels des jeweils zugeordneten Rücklauf-Ventils öffenbar und wieder verschließbar ist. Auch dadurch lassen sich Montage- bzw. Demontagevorteile erzielen und die Ventile können, falls erforderlich, einfach ausgetauscht werden. Es versteht sich, dass bei dieser zweiten Alternative jedem Vorlauf-Kanal ein Vorlauf-Ventil zugeordnet sein kann, mittels dessen der jeweilige Vorlauf-Kanal öffenbar und wieder verschließbar ist. Auch dies ermöglicht die vorstehenden Vorteile.

Bei dem erfindungsgemäßen Verfahren und/oder bei der erfindungsgemäßen Vorrichtung kann vorgesehen sein, dass es sich bei dem jeweiligen Stellantrieb um einen Zweiwege-Stellantrieb (Auf-Zu-Stellantrieb) handeln kann, bei dem ein Betätigungsglied zur Betätigung des zugeordneten Ventils relativ zu einem Grundkörper des Stellantriebs von einer Grundstellung in eine Betätigungsstellung bewegbar ist, und umgekehrt. Dadurch ist ein robuster und langlebiger Einsatz bei geringen Herstellungskosten ermöglicht.

Weitere Vorteile, Gesichtspunkte und Merkmale der Erfindung gehen aus den Ansprüchen und aus dem nachfolgenden Beschreibungsteil hervor, in dem ein bevorzugtes Ausführungsbeispiel der Erfindung anhand von Figuren näher beschrieben wird.

Es zeigen:

Fig. 1:    einen Systemaufbau mit Verkabelung;

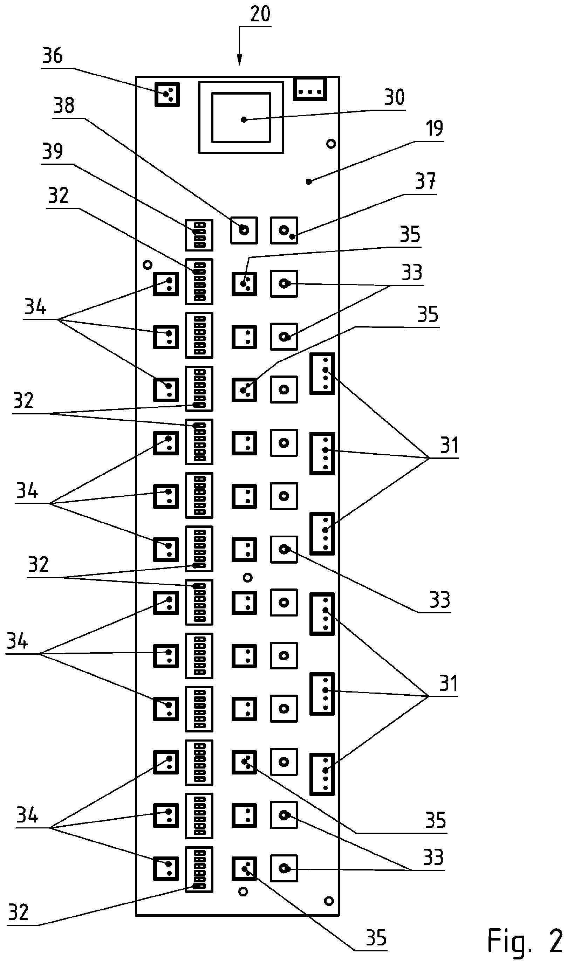

Fig. 2:    eine Regelungseinheit (Reglung).

Systemaufbau

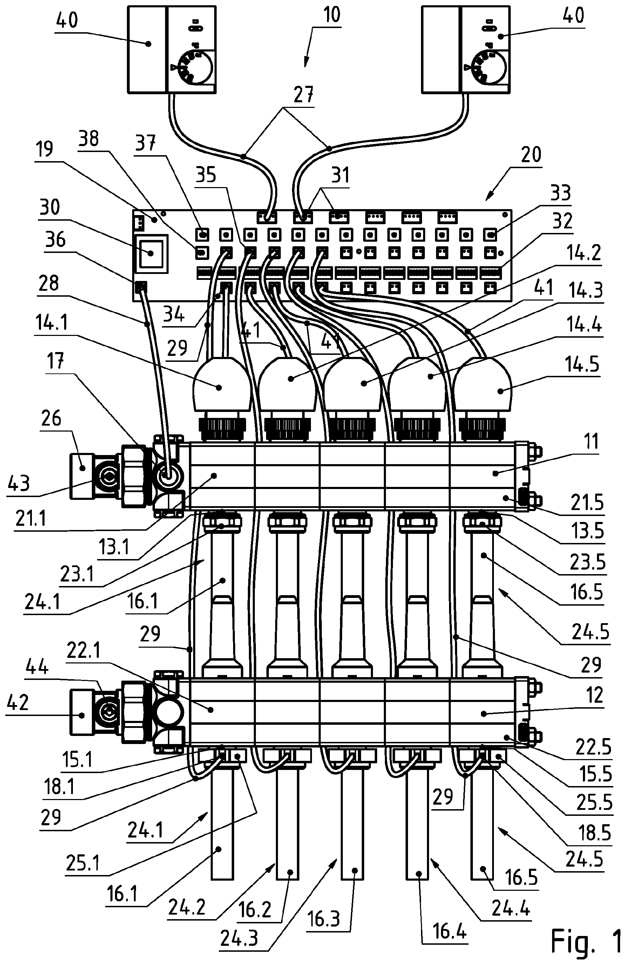

In Figur 1 ist ein Systemaufbau 10 eines Fußboden-Heizungssystems nebst Verkabelung veranschaulicht. Das Fußboden-Heizungssystem 10 umfasst die folgenden wesentlichen Bestandteile:

- einen außentemperaturgeregelten Wärmerzeuger mit einer Wasser-Umwälzpumpe (nicht in den Figuren gezeigt),
- zwei Heizkreisverteiler 11, 12, nämlich einen Vorlauf-Verteiler 11 und einen Rücklauf-Verteiler 12,
- mehrere Vorlauf-Ventile (nicht in den Figuren gezeigt), von denen jedes Vorlauf-Ventil zum Öffnen und Schließen jeweils einer auch als Vorlauf-Abzweigkanal bezeichneten Vorlauf-Abzweigleitung 13.1, 13.5 des Vorlauf-Verteilers 11 dient,
- jeweils ein Stellantrieb 14.1, 14.2, 14.3, 14.4, 14.5 zur Betätigung, respektive zum Öffnen und Schließen, des jeweiligen Vorlauf-Ventils,
- mehrere Rücklauf-Ventile (in den Figuren nicht gezeigt), von denen jedes Rücklauf-Ventil zum Öffnen und Schließen jeweils einer auch als Rücklauf-Abzweigkanal bezeichneten Rücklauf-Abzweigleitung 15.1, 15.5 des Rücklauf-Verteilers 12 dient,
- eine der Anzahl von Vorlauf-Abzweigleitungen 13.1, 13.5 bzw. Rücklauf-Abzweigleitungen 15.1, 15.5 entsprechende Anzahl von Rohrleitungen 16.1, 16.2, 16.3, 16.4, 16.5 von Heizkreisen 24.1, 24.2, 24.3, 24.4, 24.5, von denen jeweils eine Rohrleitung 16.1, 16.2, 16.3, 16.4, 16.5 einem Heizkreis 24.1, 24.2, 24.3, 24.4, 24.5 der Heizkreise 24.1, 24.2, 24.3, 24.4, 24.5 zugeordnet ist und sowohl mit einer Vorlauf-Abzweigleitung 13.1, 13.5 der Vorlauf-Abzweigleitungen 13.1, 13.5 als auch mit einer Rücklauf-Abzweigleitung 15.1, 15.5 der Rücklauf-Abzweigleitungen 15.1, 15.5 flüssigkeitsverbunden ist,

- einen Vorlauf-Temperaturfühler 17
- mehrere Rücklauf-Temperaturfühler 18.1, 18.5, von denen jeweils ein Rücklauf-Temperaturfühler 18.1, 18.5 der jeweiligen Rücklauf-Abzweigleitung 15.1, 15.5 zugeordnet ist,
- eine Regeleinrichtung 20 mit wenigstens einem Regler (Microcontroller) 38.

Heizkreisverteiler

Sowohl der Vorlauf-Verteiler 11 als auch der Rücklauf-Verteiler 12 können vorteilhaft aus mehreren hintereinandergeschalteten Verteilersegmenten 21.1, 21.5; 22.1, 22.5 bestehen. Vorzugsweise sind alle Verteilersegmente 21.1, 21.5; 22.1, 22.5 gleich gestaltet. Der Vorlauf-Verteiler 11 kann als Vorlauf-Verteiler-Balken bezeichnet oder ausgebildet sein. Der Rücklauf-Verteiler 12 kann als Rücklauf-Verteiler-Balken bezeichnet oder ausgebildet sein.

Der Vorlauf-Verteiler 11 weist einen Vorlauf-Hauptkanal 43 und mehrere, beispielsweise fünf, in diesen mündende Vorlauf-Abzweigkanäle 13.1, 13.5 auf, die jeweils mittels eines Vorlauf-Ventils öffenbar und wieder verschließbar sind (nicht in den Figuren gezeigt). Vorliegend sind fünf Vorlauf-Ventile vorgesehen.

Jedes Vorlauf-Ventil ist mit Hilfe eines Stellantriebs 14.1, 14.2, 14.3, 14.4, 14.5 betätigbar. Vorliegend sind also fünf Stellantriebe 14.1, 14.2, 14.3, 14.4, 14.5 vorgesehen. Vorzugsweise sind die Stellantriebe 14.1, 14.2, 14.3, 14.4, 14.5 gleich ausgebildet. Bei dem jeweiligen Stellantrieb 14.1, 14.2, 14.3, 14.4, 14.5 handelt es sich um einen Zweiwege-Stellantrieb (Auf-Zu-Stellantrieb). Wird dieser Stellantrieb 14.1, 14.2, 14.3, 14.4, 14.5 über den Regler bzw. Microcontroller 38 mit der erforderlichen Spannung beaufschlagt, dann bewegt sich sein Betätigungsglied von einer Grundstellung, in welcher das zugeordnete Vorlauf-Ventil den zugeordneten Vorlauf-Abzweigkanal 13.1, 13.5 absperrt, in eine Betätigungsstellung, in welcher das zugeordnete Vorlauf-Ventil den zugeordneten Vorlauf-Abzweigkanal 13.1, 13.5 öffnet. Die Bewegung von der Grundstellung in die Betätigungsstellung erfolgt gegen eine Federkraft einer Feder. Wenn der betroffene Stellantrieb 14.1, 14.2, 14.3, 14.4, 14.5 über den Regler bzw. Microcontroller 38 spannungsfrei geschaltet wird, dann wird das Betätigungsglied durch eine Feder-Rückstellkraft der Feder von der Betätigungsstellung in die Grundstellung zurückbewegt.

Jede Vorlauf-Abzweigleitung bzw. jeder Vorlauf-Abzweigkanal 13.1, 13.5 weist einen ersten Rohrleitungs-Anschluss 23.1, 23.5 zum Anschließen einer Flüssigkeits-Rohrleitung 16.1, 16.2, 16.3, 16.4, 16.5 eines Heizkreises 24.1, 24.2, 24.3, 24.4, 24.5 der Fußbodenheizung auf. Vorliegend sind also fünf erste Rohrleitungs-Anschlüsse 23.1, 23.5 vorgesehen. Außerdem sind fünf Flüssigkeits-Rohrleitungen 16.1, 16.2, 16.3, 16.4, 16.5 vorgesehen, die jeweils einem Heizkreis 24.1, 24.2, 24.3, 24.4, 24.5 der Heizkreise 24.1, 24.2, 24.3, 24.4, 24.5 zugeordnet sind. Demgemäß sind im Ausführungsbeispiel fünf Heizkreise 24.1, 24.2, 24.3, 24.4, 24.5 vorgesehen.

Der Rücklauf-Verteiler 12 weist einen Rücklauf-Hauptkanal 44 und mehrere, beispielsweise fünf, in diesen mündende Rücklauf-Abzweigkanäle 15.1, 15.5 auf, die jeweils mittels eines Rücklauf-Ventils öffenbar und wieder verschließbar sind (nicht in den Figuren gezeigt). Vorliegend sind also fünf Rücklauf-Ventile vorgesehen. Jede Rücklauf-Abzweigleitung 15.1, 15.5 weist einen zweiten Rohrleitungs-Anschluss 25.1, 25.5 zum Anschließen der zugeordneten Flüssigkeits-Rohrleitung 16.1, 16.2, 16.3, 16.4, 16.5 des betroffenen Heizkreises 24.1, 24.2, 24.3, 24.4, 24.5 der Fußbodenheizung auf. Vorliegend sind also fünf zweite Rohrleitungs-Anschlüsse 25.1, 25.5 vorgesehen.

Der Vorlauf-Hauptkanal 43 ist mit einem dritten Rohrleitungs-Anschluss 26 versehen, an den eine mit dem Wärmeerzeuger flüssigkeitsverbundene Zulauf-Rohrleitung angeschlossen ist (nicht in den Figuren gezeigt). Der Rücklauf-Hauptkanal 44 ist mit einem vierten Rohrleitungs-Anschluss 42 versehen, an den eine mit dem Wärmeerzeuger flüssigkeitsverbundene Zulauf-Rohrleitung angeschlossen ist (nicht in den Figuren gezeigt).

## Regelungs-Einrichtung

Die erfindungsgemäße Regelungseinrichtung (Regelung) 20 umfasst eine, vorzugsweise in einem Gehäuse, beispielsweise aus Kunststoff (nicht in den Figuren gezeigt), montierte Platine 19, die mit den folgenden Bauteilen bestückt ist:

- 1 Netzteil 30
- 6 Anschlüsse 31 für Raumtemperaturregler 40
- 12 Schalter 32, vorzugsweise DIP-Schalter
- 12 Potentiometer ($\Delta$T-Soll) 33
- 12 Anschlüsse 34 für jeweils einen elektrischen Stellantrieb
- 12 Anschlüsse 35 für jeweils einen Rücklauf-Temperaturfühler 18.1, 18.5
- 1 Anschluss 36 für einen Vorlauf-Temperaturfühler 17
- 1 Binärschalter zur Einstellung der Vorlauf-Auslegungs-Temperatur (AT-VL) oder 1 Potentiometer 37, das in wenigstens zwei oder mehr Stellungen rastbar ist, zur Einstellung der Vorlauf-Auslegungs-Temperatur (AT-VL)
- 1 Schalter 39, vorzugsweise DIP-Schalter zur wahlweisen Einstellung eines reinen Heizbetriebs oder eines kombinierten Heiz-/Kühlbetriebs
- 1 programmierbarer Microcontroller 38 (softwarebasierter Regler, insbesondere PI-Regler, zur bedarfsgerechten Ansteuerung der Stellantriebe, zur Messdatenerfassung und zur Systemüberwachung)

## Verkabelung

An die Regelungs-Einrichtung (Regelung) 20 sind jeweils über Elektrokabel 27, 28, 29, 41 unter anderem die folgenden Bauteile angeschlossen:

- optionale Raumtemperatur-Regler bzw. Raumthermostate 40
- vom Vorlauf-Verteiler (Vorlauf-Verteiler-Balken) 11 kommend, der Vorlauf-Temperaturfühler 17
- vom Vorlauf-Verteiler (Vorlauf-Verteiler-Balken) 11 kommend, pro Heizkreis 24.1, 24.2, 24.2, 24.3, 24.4, 24.5, der jeweilige Stellantrieb 14.1, 14.2, 14.3, 14.4, 14.5
- vom Rücklauf-Verteiler (Rücklauf-Verteiler-Balken) 13 kommend, pro Heizkreis 24.1, 24.2, 24.2, 24.3, 24.4, 24.5, der jeweilige Rücklauf-Temperaturfühler 18.1, 18.5.

Wenn die Raumtemperatur-Regler bzw. die Raumthermostate 40 mit ihren zugehörigen Raumtemperaturfühlern angeschlossen sind, dann haben diese nur eine übergeordnete Funktion dergestalt, dass sie abhängig von der mittels des jeweiligen Raumtemperaturfühlers gemessenen Raumtemperatur die Regelung des zugeordneten Stellantriebs freigeben oder nicht freigeben.

## Voraussetzungen

Vor der Installation einer Fußbodenheizung muss nach EnEV-Anforderungen (EnEV = Energieeinsparverordnung) eine auch als Wärmebedarfsberechnung bezeichnete Norm-Heizlast-Berechnung nach DIN EN 12831 erstellt werden. Dabei müssen auch ggf. vorhandene oder zukünftige nationale Ergänzungen dieser Norm beachtet werden, beispielsweise die DIN SPEC 12831. Gemäß der DIN EN 12831 ist eine fachgerechte Planung mit Heizlast-, Rohrnetz- und Heizflächenberechnung von einem Planer erforderlich. Mit dieser Wärmebedarfsberechnung wird die Norm-Heizlast eines Gebäudes berechnet. Die Norm-Heizlast ist als die Wärmezufuhr (Leistung) definiert, die benötigt wird, um die geforderte Norm-Innentemperatur unter Norm-Außenbedingungen bereitzustellen. Mit Bezug auf eine Heizungsanlage eines Gebäudes ist die Norm-Heizlast der Wärmestrom, der von einer Heizungsanlage dem Gebäude zugeführt wird, sodass bei tiefster Norm-Außentemperatur im Winter die Norm-Innenraumtemperatur herrscht. Hier werden verschiedene Kennwerte berechnet, um die gewünschten Raumtemperaturen zu erreichen. Da die Norm-Heizlast-Berechnung aufwändig ist, wird zur Berechnung regelmäßig eine spezielle Software eingesetzt. Aus der Norm-Heizlast-Berechnung nach DIN EN 12831 ergeben sich unter anderem der Wärmebedarf, die pro Heizkreis erforderliche Soll-Temperatur-Differenz (AT-Soll [i]) und die Volumenströme für die einzelnen Heizkreise. Einen Teil der aus der Wärmebedarfs- bzw.

Norm-Heizlast-Berechnung hervorgehenden Kennwerte macht sich die Erfindung zu Nutze. Relevant für die Regelung gemäß der Erfindung sind die folgenden Kennwerte:

- die aus der Wärmebedarfsberechnung ermittelte Vorlauf-Auslegungs-Temperatur AT-VL;
- die aus der Wärmebedarfsberechnung ermittelte Soll-Temperatur-Differenz ΔT-Soll [i] für jeden Heizkreis 24.1, 24.2, 24.3, 24.4, 24.5;
- die Abschalttemperatur des Wärmeerzeugers (T-Heizstopp).

Ein Kerngedanke der Erfindung ist es, dass in festgelegten Zeitintervallen sowohl die Vorlauftemperatur T-VL mittels des Vorlauf-Temperaturfühlers 17 als auch die jeweilige Rücklauftemperatur T-RL [i] mittels des jeweiligen Rücklauf-Temperaturfühlers 18.1, 18.5 erfasst werden und zeitgleich oder anschließend die jeweilige Ist-Temperatur-Differenz AT-Ist [i] der Vorlauftemperatur T-VL und der jeweiligen Rücklauftemperatur T-RL [i] gemäß der Gleichung

$$\Delta T\text{-Ist } [i] = T\text{-VL} - T\text{-RL } [i]$$

berechnet wird und mit der jeweiligen Soll-Temperatur-Differenz ΔT-Soll [i] verglichen wird, indem
entweder
eine Temperatur-Differenz ΔT [i] (= Regelabweichung) der berechneten jeweiligen Ist-Temperatur-Differenz AT-Ist [i] und der aus der Wärmebedarfsberechnung resultierenden jeweiligen Soll-Temperatur-Differenz ΔT-Soll [i] gemäß der Gleichung

$$\Delta T [i] = \Delta T\text{-Ist } [i] - \Delta T\text{-Soll } [i]$$

für jeden Heizkreis 24.1, 24.2, 24.3, 24.4, 24.5 berechnet wird
oder
ein Quotient Q [i] (= Regelabweichung) der berechneten jeweiligen Ist-Temperatur-Differenz AT-Ist [i] und der aus der Wärmebedarfsberechnung resultierenden jeweiligen Soll-Temperatur-Differenz ΔT-Soll [i] gemäß der Gleichung

$$Q [i] = \Delta T\text{-Ist } [i] / \Delta T\text{-Soll } [i]$$

für jeden Heizkreis 24.1, 24.2, 24.3, 24.4, 24.5 berechnet wird.
Der Index i bezeichnet die Nummer des jeweiligen Heizkreises. Im Ausführungsbeispiel sind die Volumenströme einer Flüssigkeit mittels des Reglers bzw. Microcontrollers 38 in bis zu 12 separaten Heizkreisen regelbar, so dass die Nummer der Heizkreise 1 bis 12 betragen kann.

Wenn entweder der Wert der Regelabweichung ΔT [i] ungleich null wird oder der Wert der Regelabweichung Q [i] ungleich eins wird, wird über die Regelungseinrichtung 20, auch "Regelung" genannt bzw. über den Regler/Microcontroller 38, der betroffene Stellantrieb 14.1, 14.2, 14.3, 14.4, 14.5 angesteuert. Dadurch überführt dieser Stellantrieb 14.1, 14.2, 14.3, 14.4, 14.5 das damit gekoppelte Vorlauf-Ventil in eine (neue) Öffnungsstellung, wodurch ein größer oder kleinerer Volumenstrom des erwärmten Wassers durch den betroffenen Vorlauf-Abzweigkanal 13.1, 13.5 bzw. durch die damit flüssigkeitsverbundene Rohrleitung 16.1, 16.5 des betroffenen Heizkreises 24.1, 24.5 strömt.

Inbetriebnahme

An den Schaltern 32 werden durch Einstellung geeigneter Schalterstellungen den Raumtemperaturreglern 40 die zugehörigen Heizkreise 24.1, 24.2, 24.3, 24.4, 24.5 (Stellantriebe 14.1, 14.2, 14.3, 14.4, 14.5) zugeordnet. An den Potentiometern 33 wird für jeden Heizkreis 24.1, 24.2, 24.3, 24.4, 24.5 die jeweils aus der Norm-Heizlast-Berechnung für jeden Heizkreis 24.1, 24.2, 24.3, 24.4, 24.5 ermittelte Soll-Temperatur-Differenz ΔT-Soll eingestellt. Mittels des Binärschalters 37 wird die aus der Wärmebedarfsberechnung resultierende Vorlauf-Auslegungs-Temperatur AT-VL des Wärmeerzeugers eingestellt.

Prinzipielle Funktionen

Heizbetrieb:

Im Heizbetrieb durchströmt vom Wärmeerzeuger erwärmtes Wasser die Flüssigkeits-Rohrleitungen 16.1, 16.2, 16.3, 16.4, 16.5 der Fußbodenheizung. Durch die Wärmeabgabe der Flüssigkeits-Rohrleitung 16.1, 16.2, 16.3, 16.4, 16.5 des jeweiligen Heizkreises an den zugeordneten Raum (nicht in den Figuren gezeigt) entsteht eine Temperatur-Differenz AT-Ist zwischen der Vorlauf-Temperatur T-VL und der Rücklauf-temperatur T-RL [i] des jeweiligen Heizkreises 24.1, 24.2, 24.3, 24.4, 24.5. Die Regelungseinrichtung (Regelung) 20 bzw. der Microcontroller/Regler 38 berechnet für jeden Heizkreis 24.1, 24.2, 24.3, 24.4, 24.5 die Ist-Temperatur-Differenz AT-Ist [i] zwischen der mittels des (zentralen) Vorlauf-Temperaturfühlers 17 erfassten Vorlauf-Temperatur T-VL und der mittels des jeweiligen Rücklauf-Temperaturfühlers 18.1, 18.5 erfassten Rücklauf-Temperatur T-RL [i]. Wird die jeweilige Ist-Temperatur-Differenz AT-Ist [i] größer als der an dem jeweiligen Potentiometer 33 eingestellte Wert der Soll-Temperatur-Differenz ΔT-Soll [i], so dass entweder die Temperatur-Differenz ΔT [i] (Regelabweichung) größer als null wird, also positiv wird, oder der Quotient Q [i] (Regelabweichung) größer als eins wird, wird der Kanal des zugehörigen Stellantriebs 14.1, 14.2, 14.3, 14.4, 14.5 von der Regelungseinrichtung (Regelung) 20 bzw. von dem Microcontroller/Regler 38 mit seiner Betriebsspannung angesteuert, so dass der betroffene Stellantrieb 14.1, 14.2, 14.3, 14.4, 14.5 eingeschaltet wird. Der angesteuerte bzw. eingeschaltete Stellantrieb 14.1, 14.2, 14.3, 14.4, 14.5 öffnet das mit ihm gekoppelte Vorlauf-Ventil, so dass es zu einer größeren Volumenströmung von, vorzugsweise mittels einer Heizeinrichtung (Wärmeerzeuger) erwärmtem Wasser in der zugeordneten Vorlauf-Abzweigleitung 13.1, 13.5 und folglich in der damit flüssigkeitsverbundenen Flüssigkeits-Rohrleitung 16.1, 16.5 des zugeordneten Heizkreises 24.1, 24.5 kommt, und zwar so lange, bis der Wert der Regelabweichung $\Delta T$ [i] gleich null ist oder bis der Wert der Regelabweichung Q [i] gleich eins ist, also bis

$$\Delta T\text{-Ist [i]} = \Delta T\text{-Soll [i]}$$

erreicht ist. Ist dies der Fall, schaltet die Regelungseinrichtung (der Regler) 20 bzw. der Microcontroller/Regler 38 den betroffenen Stellantrieb 14.1, 14.2, 14.3, 14.4, 14.5 wieder ab. Wird anschließend aufgrund einer Wärmeabgabe die Ist-Temperatur-Differenz AT-Ist [i] wieder größer als null, also positiv, wiederholt sich der Vorgang. Über die Programmierung des Microcontrollers 38 der Regeleinheit 20 pendelt sich das jeweilige Stellglied (Stellantrieb 14.1, 14.2, 14.3, 14.4, 14.5) ein. Der Microcontroller 38 der Regeleinheit 20 ist derart programmiert, dass das jeweilige Vorlauf-Ventil immer so weit geöffnet bleibt, dass der Wärmeverlust des betroffenen Heizkreises 24.1, 24.2, 24.3, 24.4, 24.5 ausgeglichen wird.

### Übergang vom Heizbetrieb in den Kühlbetrieb:

Wird die jeweilige Ist-Temperatur-Differenz AT-Ist [i] kleiner als null, also negativ, wird über einen einstellbaren oder voreingestellten Zeitraum, beispielsweise von 15 Minuten, erfasst, ob der Wert der Ist-Temperatur-Differenz AT-Ist [i] kleiner als null bleibt, also negativ bleibt. Wenn dies der Fall ist, wird mittels der Regelungseinrichtung (Regelung) bzw. mittels des Microcontrollers/Reglers 38 die Temperatur-Differenz $\Delta T$ [i] mit dem Wert -1 multipliziert. In Folge dessen wird der Kanal des zugehörigen Stellantriebs 14.1, 14.2, 14.3, 14.4, 14.5 von der Regelungseinrichtung (Regelung) 20 bzw. von dem Microcontroller/Regler 38 mit seiner Betriebsspannung angesteuert, so dass der betroffene Stellantrieb 14.1, 14.2, 14.3, 14.4, 14.5 eingeschaltet wird. Der angesteuerte bzw. eingeschaltete Stellantrieb 14.1, 14.2, 14.3, 14.4, 14.5 öffnet das mit ihm gekoppelte Vorlauf-Ventil, so dass es zu einer größeren Volumenströmung von, vorzugsweise mittels einer Kühleinrichtung gekühltem, Wasser in der zugeordneten Vorlauf-Abzweigleitung 13.1, 13.5 und folglich in der damit flüssigkeitsverbundenen Rohrleitung 16.1, 16.5 des zugeordneten Heizkreises 24.1, 24.5 kommt, und zwar so lange, bis der Wert der Regelabweichung $\Delta T$ [i] gleich null ist oder bis der Wert der Regelabweichung Q [i] gleich eins ist,

also bis

$$\Delta T\text{-Ist [i]} = \Delta T\text{-Soll [i]}$$

erreicht ist. Ist dies der Fall, schaltet die Regelungseinrichtung (der Regler) 20 bzw. der Microcontroller/Regler 38 den betroffenen Stellantrieb 14.1, 14.2, 14.3, 14.4, 14.5 wieder ab. Wird anschließend aufgrund einer Wärmeaufnahme die Ist-Temperatur-Differenz AT-Ist wieder kleiner als null, also negativ, wiederholt sich der Vorgang. Über die Programmierung des Microcontrollers 38 der Regeleinheit 20 pendelt sich das jeweilige Stellglied (Stellantrieb 14.1, 14.2, 14.3, 14.4, 14.5) ein. Der Microcontroller 38 der Regeleinheit 20 ist derart programmiert, dass das jeweilige Vorlauf-Ventil immer so weit geöffnet bleibt, dass die Wärmeaufnahme des betroffenen Heizkreises 24.1, 24.2, 24.3, 24.4, 24.5 ausgeglichen wird.

### Kühlbetrieb:

Im Kühlbetrieb durchströmt, vorzugsweise von einer Kühleinrichtung abgekühltes bzw. entwärmtes, Wasser die Rohrleitungen 16.1, 16.2, 16.3, 16.4, 16.5 der Fußbodenheizung. Durch die Wärmeaufnahme aus dem zugeordneten Raum (nicht in den Figuren gezeigt) in die Flüssigkeits-Rohrleitung 16.1, 16.2, 16.3, 16.4, 16.5 des jeweiligen Heizkreises 24.1, 24.2, 24.3, 24.4, 24.5 entsteht eine Temperatur-Differenz AT-Ist zwischen der Vorlauf-Temperatur T-VL und der Rücklauftemperatur T-RL [i] des jeweiligen Heizkreises 24.1, 24.2, 24.3, 24.4, 24.5. Die Regelungseinrichtung (Regelung) 20 bzw. der Microcontroller/Regler 38 berechnet für jeden Heizkreis 24.1, 24.2, 24.3, 24.4, 24.5 die Ist-Temperatur-Differenz AT-Ist [i] zwischen der mittels des (zentralen) Vorlauf-Temperaturfühlers 17 erfassten Vorlauf-Temperatur T-VL und der mittels der Rücklauf-Temperaturfühler 18.1, 18.5 jeweils erfassten Rücklauf-Temperatur T-RL [i].

Sobald der Wert der berechneten Ist-Temperatur-Differenz AT-Ist [i] kleiner als null wird, also negativ wird, wird über einen bestimmten Zeitraum erfasst, ob die Ist-Temperatur-Differenz AT-Ist [i] kleiner als null bleibt, also negativ bleibt. Sobald dies der Fall ist, wird die Temperatur-Differenz $\Delta T$ [i] von dem Regler bzw. Microcontroller 38, mit dem Wert -1 multipliziert, so dass dadurch eine positive Temperatur-Differenz $\Delta T$ [i] erzeugt bzw. gebildet wird (negierte Regelung). Infolgedessen wird der dem betroffenen Heizkreis 24.1, 24.2, 24.3, 24.4, 24.5 zugeordnete Stellantrieb 14.1, 14.2, 14.3, 14.4, 14.5 eingeschaltet und dadurch wird das mit diesem Stellantrieb 14.1, 14.2, 14.3, 14.4, 14.5 gekoppelte Vorlauf-Ventil mittels dieses Stellantriebs 14.1, 14.2, 14.3, 14.4, 14.5 in eine Öffnungsstellung überführt, in welcher ein größerer Volumenstrom der Flüssigkeit durch den diesem Stellantrieb 14.1, 14.2, 14.3, 14.4, 14.5 zugeordneten Vorlauf-Abzweigkanal 13.1, 13.5 in die betroffene Flüssigkeits-Rohrleitung 16.1, 16.2, 16.3, 16.4, 16.5 des betroffenen Heizkreises 24.1, 24.2, 24.3, 24.4, 24.5 strömt.

Wesentliche Gesichtspunkte, Vorteile und Merkmale der Erfindung:

- Die für jeden Heizkreis 24.1, 24.2, 24.3, 24.4, 24.5 mittels der Norm-Heizlast-Berechnung errechnete Soll-Temperatur-Differenz $\Delta$T-Soll [i] wird zur Regelung der Raumtemperatur herangezogen.
- Die Regeleinrichtung (der Regler) 20 bzw. der Microcontroller/Regler 38 regelt den betroffenen Stellantrieb 14.1, 14.2, 14.3, 14.4, 14.5 stetig, vorzugsweise wobei ein gewöhnlicher Zweiwege-Stellantrieb (Auf-Zu-Stellantrieb) verwendet wird. Dies bedeutet, dass mittels des Microcontrollers 38 der betroffene Stellantrieb 14.1, 14.2, 14.3, 14.4, 14.5 in der Schwebe gehalten wird, so dass das mit dem jeweiligen Stellantrieb 14.1, 14.2, 14.3, 14.4, 14.5 gekoppelte Vorlauf-Ventil in einer oder mehreren Öffnungs-Zwischenstellungen (zwischen zu und maximal auf) gehalten wird.
- Die erfindungsgemäße Regelung funktioniert auch bei dynamischen Systemen. Wird ein Heizkreis 24.1, 24.2, 24.3, 24.4, 24.5 geschlossen bzw. abgesperrt, steigt aufgrund eines höheren Durchflusses (Volumenstroms) in dem/den anderen geöffneten Heizkreis(en) 24.1, 24.2, 24.3, 24.4, 24.5 (jeweils) die Ist-Temperatur-Differenz ($\Delta$T-Ist [i]), so dass über den Microcontroller 38 der/die betroffene(n) Stellantrieb(e) 14.1, 14.2, 14.3, 14.4, 14.5 sofort nachgeführt wird/werden.
- Ein Raumtemperaturregler und ein Raumtemperaturfühler sind nicht zwingend notwendig.
- es kann ein automatischer hydraulischer Abgleich erreicht werden.
- ein Einstellen eines gewünschten Durchflusses (Volumenstroms) in dem jeweiligen Heizkreis und ein Absperren des jeweiligen Heizkreises erfolgen voneinander getrennt.
- die Heizkreise beeinflussen sich nicht gegenseitig.
- problemlos nachrüstbar bei Altanlagen.
- (vorhandene) Drosselventile mit Durchflussmesser werden nur noch zur Anzeige des Durchflusses (Volumenstroms) und zum Absperren benötigt.
- auch ohne Raumtemperaturregler und ohne Raumtemperaturfühler verwendbar; ein Raumtemperaturregler nebst Raumtemperaturfühler sind also nicht zwingend erforderlich.
- bei außentemperaturgeregelten Wärmeerzeugern kann die jeweilige Rücklauftemperatur T-RL [i] über die jeweils vorgegebene Soll-Temperatur-Differenz $\Delta$T-Soll [i] automatisch nachgeführt werden.
- Eine Überheizung von Räumen wird vermieden, da anstelle eines Raumtemperaturreglers die jeweilige Rücklauftemperatur T-RL [i] zur Raumtemperaturregelung herangezogen wird; schnellere Reaktion bzw. kürzere Reaktionszeit als beim Stand der Technik.

**Bezugszeichenliste**

| | |
|---|---|
| 10 | Systemaufbau |
| 11 | (erster) Heizkreisverteiler/Vorlauf-Verteiler(-Balken) |
| 12 | (zweiter) Heizkreisverteiler/Rücklauf-Verteiler(-Balken) |
| 13.1 | Vorlauf-Abzweigleitung/-Abzweigkanal |
| 13.5 | Vorlauf-Abzweigleitung/-Abzweigkanal |
| 14.1 | Stellantrieb |
| 14.2 | Stellantrieb |
| 14.3 | Stellantrieb |
| 14.4 | Stellantrieb |
| 14.5 | Stellantrieb |
| 15.1 | Rücklauf-Abzweigleitung/-Abzweigkanal |
| 15.5 | Rücklauf-Abzweigleitung/-Abzweigkanal |
| 16.1 | (Flüssigkeits-)Rohrleitung |
| 16.2 | (Flüssigkeits-)Rohrleitung |
| 16.3 | (Flüssigkeits-)Rohrleitung |
| 16.4 | (Flüssigkeits-)Rohrleitung |
| 16.5 | (Flüssigkeits-)Rohrleitung |
| 17 | Vorlauf-Temperaturfühler |
| 18.1 | Rücklauf-Temperaturfühler |
| 18.5 | Rücklauf-Temperaturfühler |
| 19 | Platine |
| 20 | Regeleinrichtung/Regelung/Regler |
| 21.1 | (Vorlauf-)Verteilersegment |
| 21.5 | (Vorlauf-)Verteilersegment |
| 22.1 | (Rücklauf-)Verteilersegment |
| 22.5 | (Rücklauf-)Verteilersegment |
| 23.1 | (erster) Rohrleitungs-Anschluss |
| 23.5 | (erster) Rohrleitungs-Anschluss |
| 24.1 | (erster) Heizkreis |
| 24.2 | (zweiter) Heizkreis |
| 24.3 | (dritter) Heizkreis |
| 24.4 | (vierter) Heizkreis |
| 24.5 | (fünfter) Heizkreis |
| 25.1 | (zweiter) Rohrleitungs-Anschluss |
| 25.5 | (zweiter) Rohrleitungs-Anschluss |
| 26 | (dritter) Rohrleitungs-Anschluss |
| 27 | Anschlusskabel/Elektrokabel (für Raumtemperaturregler) |
| 28 | Anschlusskabel/Elektrokabel (für Vorlauf-Temperaturfühler) |
| 29 | Anschlusskabel/Elektrokabel (für Rücklauf-Temperaturfühler) |
| 30 | Netzteil |
| 31 | Anschluss (für Raumtemperatur-Regler) |
| 32 | (DIP-)Schalter |
| 33 | Potentiometer-$\Delta$T |
| 34 | Anschluss (für Stellantrieb) |
| 35 | Anschluss (für Rücklauf-Temperaturfühler) |

36      Anschluss (für Vorlauf-Temperaturfühler)
37      Binärschalter/Potentiometer (AT-VL)
38      Microcontroller/Regler
39      (DIP-)Schalter (Umschaltung zwischen Heizbetrieb und kombiniertem Heiz-/Kühlbetrieb)
40      Raumtemperatur-Regler/Raumthermostat
41      Anschlusskabel/Elektrokabel (für Stellantrieb)
42      (vierter) Rohrleitungs-Anschluss
43      Vorlauf-Hauptkanal/-Hauptleitung
44      Rücklauf-Hauptkanal/-Hauptleitung

AT-VL      Vorlauf-Auslegungs-Temperatur
T-VL      Vorlauftemperatur
T-RL      Rücklauftemperatur
AT-Ist      Ist-Temperatur-Differenz
$\Delta$T-Soll      Soll-Temperatur-Differenz
$\Delta$T      Temperatur-Differenz
Q      Quotient

**Patentansprüche**

1.  Verfahren zur Regelung von Volumenströmen einer Flüssigkeit in Flüssigkeits-Rohrleitungen (16.1, 16.2, 16.3, 16.4, 16.5) von Heizkreisen (24.1, 24.2, 24.3, 24.4, 24.5) eines Heiz- und/oder Kühlsystems (10), das einen Vorlauf, einen Vorlauf-Verteiler (11), einen Rücklauf und einen Rücklauf-Verteiler (12) umfasst, wobei der Vorlauf-Verteiler (11) einen Vorlauf-Hauptkanal (43) und mehrere in diesen mündende Vorlauf-Abzweigkanäle (13.1, 13.5) aufweist, an die jeweils mit ihrem ersten Rohrleitungsende eine Flüssigkeits-Rohrleitung (16.1, 16.2, 16.3, 16.4, 16.5) eines Heizkreises (24.1, 24.5) der Heizkreise (24.1, 24.2, 24.3, 24.4, 24.5) angeschlossen ist, die jeweils mit ihrem zweiten Rohrleitungsende an einen Rücklauf-Abzweigkanal (15.1, 15.5) einer Anzahl von mehreren Rücklauf-Abzweigkanälen (15.1, 15.5) des Rücklauf-Verteilers (12) angeschlossen sind, der einen Rücklauf-Hauptkanal (44) aufweist, in den die Rücklauf-Abzweigkanäle (15.1, 15.5) münden, und wobei jeder Flüssigkeits-Rohrleitung (16.1, 16.2, 16.3, 16.4, 16.5) des jeweiligen Heizkreises (24.1, 24.2, 24.3, 24.4, 24.5) ein Ventil zugeordnet ist, das mit Hilfe eines damit gekoppelten Stellantriebs (14.1, 14.2, 14.3, 14.4, 14.5) in eine erste Öffnungsstellung überführbar ist, in welcher die Flüssigkeit mit einem maximalen Volumenstrom durch die betroffene Flüssigkeits-Rohrleitung (16.1, 16.2, 16.3, 16.4, 16.5) strömen kann oder strömt, und in eine Schließstellung überführbar ist, in welcher die betroffene Flüssigkeits-Rohrleitung (16.1, 16.2, 16.3, 16.4, 16.5) gegen ein Durchströmen der Flüssigkeit abgesperrt ist, und wobei der Stellantrieb (14.1, 14.2, 14.3, 14.4, 14.5) mittels eines Reglers (20, 38) abhängig von einer mittels wenigstens eines Temperaturfühlers (17; 18.1, 18.5) erfassten Temperatur derart gesteuert wird, dass eine Änderung des Volumenstroms der Flüssigkeit durch die betroffene Flüssigkeits-Rohrleitung (16.1, 16.2, 16.3, 16.4, 16.5) des betroffenen Heizkreises (24.1, 24.2, 24.3, 24.4, 24.5) erreicht wird, wobei der Regler (20, 38) mit einem an oder in dem Vorlauf-Hauptkanal (43) des Vorlauf-Verteilers (11) angeordneten Vorlauf-Temperaturfühler (17) zur Erfassung einer Vorlauf-Temperatur (T-VL) und mit einer Anzahl an Rücklauf-Temperaturfühlern (18.1, 18.5) zur Erfassung jeweils einer Rücklauf-Temperatur (T-RL [i]) gekoppelt ist, von denen jeweils ein Rücklauf-Temperaturfühler (18.1, 18.5) an oder in einem Rücklauf-Abzweigkanal (15.1, 15.5) der Rücklauf-Abzweigkanäle (15.1, 15.5) des Rücklauf-Verteilers (12) angeordnet ist, und wobei eine der Anzahl an Rücklauf-Abzweigkanälen (15.1, 15.5) entsprechende Anzahl von Rücklauf-Temperaturfühlern (18.1, 18.5) vorgesehen ist, die jeweils mit dem Regler (20, 38) gekoppelt sind, und dass mittels des Reglers (20, 38) jeweils eine Ist-Temperatur-Differenz ($\Delta$T-Ist [i]) der mittels des Vorlauf-Temperaturfühlers (17) erfassten Vorlauf-Temperatur (T-VL) und der mittels des jeweiligen Rücklauf-Temperaturfühlers (18.1, 18.5) erfassten Rücklauf-Temperatur (T-RL [i]) berechnet wird und jeweils diese Ist-Temperatur-Differenz ($\Delta$T-Ist [i]) mit einer gewünschten Soll-Temperatur-Differenz (AT-Soll [i]) verglichen wird,
**dadurch gekennzeichnet,**
**dass** mittels des Reglers (20, 38) eine Temperatur-Differenz ($\Delta$T [i]) der Ist-Temperatur-Differenz ($\Delta$T-Ist [i]) und der Soll-Temperatur-Differenz (AT-Soll [i]) berechnet wird, wobei mittels des Reglers (20, 38) erfasst wird, ob der Wert der Temperatur-Differenz ($\Delta$T [i]) gleich oder ungleich null wird, wobei der Regler (20, 38) dann, wenn der Wert der Temperatur-Differenz ($\Delta$T [i]) ungleich null wird, denjenigen Stellantrieb (14.1, 14.2, 14.3, 14.4, 14.5), der dem betroffenen Heizkreis (24.1, 24.2, 24.3, 24.4, 24.5) zugeordnet ist, entweder gleichzeitig oder quasi gleichzeitig oder eine einstellbare Zeit später oder eine voreingestellte Zeit später einschaltet, wodurch das mit diesem Stellantrieb (14.1, 14.2, 14.3, 14.4, 14.5) gekoppelte Ventil mittels dieses Stellantriebs (14.1, 14.2, 14.3, 14.4, 14.5) entweder in die erste Öffnungsstellung überführt wird oder in eine zweite Öffnungsstellung überführt wird, so dass dann ein im Vergleich zu dem Volumenstrom der Flüssigkeit durch die betroffene Flüssigkeits-Rohrleitung (16.1, 16.2, 16.3, 16.4, 16.5) unmittelbar vor dem Einschalten des Stellantriebs (14.1, 14.2, 14.3, 14.4, 14.5) größerer Volumenstrom der Flüssigkeit durch die betroffene Flüssigkeits-Rohrleitung (16.1, 16.2, 16.3, 16.4, 16.5) des betroffenen Heizkreises (24.1, 24.2, 24.3, 24.4, 24.5) strömt, wobei der Regler (20, 38) den betroffenen Stellantrieb (14.1, 14.2, 14.3, 14.4, 14.5) wieder ausschaltet, wenn der Wert der Temperatur-Differenz ($\Delta$T [i]) wieder null beträgt, wodurch das mit diesem Stellantrieb (14.1, 14.2, 14.3, 14.4, 14.5) gekoppelte Ventil entweder in eine dritte Öffnungsstellung überführt wird, in welcher ein kleinerer Volumenstrom der Flüssigkeit durch die betroffene Flüssigkeits-Rohrleitung (16.1, 16.2, 16.3, 16.4, 16.5) des betroffenen Heizkreises (24.1, 24.2, 24.3, 24.4, 24.5) strömt oder in die Schließstellung überführt wird, in welcher die betroffene Flüssigkeits-Rohrleitung (16.1, 16.2, 16.3, 16.4, 16.5) gegen ein Durchströmen der Flüssigkeit abgesperrt ist, und dass dann, wenn der Wert der Ist-Temperatur-Differenz ($\Delta$T-Ist [i]) kleiner als null wird, über einen einstellbaren oder voreingestellten Zeitraum erfasst wird, ob der Wert der Ist-Temperatur-Differenz ($\Delta$T-Ist [i]) kleiner als null bleibt, und wenn dies der Fall ist, die Temperatur-Differenz ($\Delta$T [i]) mit dem Wert -1 multipliziert wird, wodurch der dem betroffenen Heizkreis (24.1, 24.2, 24.3, 24.4, 24.5) zugeordnete Stellantrieb (14.1, 14.2, 14.3, 14.4, 14.5) eingeschaltet wird, wodurch das mit diesem Stellantrieb (14.1, 14.2, 14.3, 14.4, 14.5) gekoppelte Ventil mittels dieses Stellantriebs (14.1, 14.2, 14.3, 14.4, 14.5) entweder in die erste Öffnungsstellung überführt wird oder in die zweite Öffnungsstellung überführt wird, so dass dann ein im Vergleich zu dem Volumenstrom der Flüssigkeit durch die betroffene Flüssigkeits-Rohrleitung (16.1, 16.2, 16.3, 16.4, 16.5) unmittelbar vor dem Einschalten des Stellantriebs (14.1, 14.2, 14.3, 14.4, 14.5) größerer Volumenstrom der Flüssigkeit durch die betroffene Flüssigkeits-Rohrleitung (16.1, 16.2, 16.3, 16.4, 16.5) des betroffenen Heizkreises (24.1, 24.2, 24.3, 24.4, 24.5) strömt.

2. Verfahren nach Anspruch 1, **dadurch gekennzeichnet, dass** dann, wenn der Wert der Temperatur-Differenz ($\Delta$T [i]) größer als null wird, der Regler (20, 38) gleichzeitig oder quasi gleichzeitig den Stellantrieb (14.1, 14.2, 14.3, 14.4, 14.5) einschaltet, der dem betroffenen Heizkreis (24.1, 24.2, 24.3, 24.4, 24.5) zugeordnet ist, wodurch das mit diesem Stellantrieb (14.1, 14.2, 14.3, 14.4, 14.5) gekoppelte Ventil mittels dieses Stellantriebs (14.1, 14.2, 14.3, 14.4, 14.5) entweder in die erste Öffnungsstellung überführt wird oder in die zweite Öffnungsstellung überführt wird, so dass dann ein im Vergleich zu dem Volumenstrom der Flüssigkeit durch die betroffene Flüssigkeits-Rohrleitung (16.1, 16.2, 16.3, 16.4, 16.5) unmittelbar vor dem Einschalten des Stellantriebs (14.1, 14.2, 14.3, 14.4, 14.5) größerer Volumenstrom der Flüssigkeit durch die betroffene Flüssigkeits-Rohrleitung (16.1, 16.2, 16.3, 16.4, 16.5) des betroffenen Heizkreises (24.1, 24.2, 24.3, 24.4, 24.5) strömt.

3. Verfahren nach einem der Ansprüche 1 oder 2, **dadurch gekennzeichnet, dass** die Vorlauf-Temperatur mittels des Vorlauf-Temperaturfühlers (17) und die jeweilige Rücklauf-Temperatur mittels des jeweiligen Rücklauf-Temperaturfühlers (18.1, 18.5) in bestimmten Zeitabständen erfasst werden.

4. Vorrichtung zur Durchführung des Verfahrens nach einem der vorstehenden Ansprüche, umfassend einen Vorlauf-Verteiler (11) und einen Rücklauf-Verteiler (12) für ein Heiz- und/oder Kühlsystem (10) oder eines Heiz- und/oder Kühlsystems (10), wobei der Vorlauf-Verteiler (11) einen Vorlauf-Hauptkanal (43) und mehrere in diesen mündende Vorlauf-Abzweigkanäle (13.1, 13.5) aufweist, an die jeweils mit ihrem ersten Rohrleitungsende eine Flüssigkeits-Rohrleitung (16.1, 16.2, 16.3, 16.4, 16.5) eines Heizkreises (24.1, 24.5) der Heizkreise (24.1, 24.2, 24.3, 24.4, 24.5) angeschlossen ist, die jeweils mit ihrem zweiten Rohrleitungsende an einen Rücklauf-Abzweigkanal (15.1, 15.5) einer Anzahl von mehreren Rücklauf-Abzweigkanälen (15.1, 15.5) des Rücklauf-Verteilers (12) angeschlossen sind, der einen Rücklauf-Hauptkanal (44) aufweist, in den die Rücklauf-Abzweigkanäle (15.1, 15.5) münden, und wobei jeder Flüssigkeits-Rohrleitung (16.1, 16.2, 16.3, 16.4, 16.5) des jeweiligen Heizkreises (24.1, 24.2, 24.3, 24.4, 24.5) ein Ventil zugeordnet ist, das mit Hilfe eines damit gekoppelten Stellantriebs (14.1, 14.2, 14.3, 14.4, 14.5) in eine erste Öffnungsstellung überführbar ist, in welcher eine Flüssigkeit durch die betroffene Flüssigkeits-Rohrleitung (16.1, 16.2, 16.3, 16.4, 16.5) strömen kann oder strömt, und in eine Schließstellung überführbar ist, in welcher die betroffene Flüssigkeits-Rohrleitung (16.1, 16.2, 16.3, 16.4, 16.5) gegen ein Durchströmen der Flüssigkeit abgesperrt ist, und umfassend wenigstens einen Temperaturfühler (17; 18.1, 18.5) und einen Regler (20, 38) zur Steuerung des jeweiligen Stellantriebs (14.1, 14.2, 14.3, 14.4, 14.5) abhängig von einer mittels des wenigstens einen Temperaturfühlers (18.1, 18.5) erfassten Temperatur, um mittels des jeweiligen Stellantriebs (14.1, 14.2, 14.3, 14.4, 14.5) das mit diesem gekoppelte Ventil derart zu betätigen, dass eine Änderung eines Volumenstromes der Flüssigkeit durch die betroffene Flüssigkeits-Rohrleitung (16.1, 16.2, 16.3, 16.4, 16.5) bewirkbar ist, wobei der Regler (20, 38) mit einem an oder in dem Vorlauf-Hauptkanal (43) des Vorlauf-Verteilers (11) angeordneten Vorlauf-Temperaturfühler (17) zur Erfassung einer Vorlauf-Temperatur (T-VL) und mit einer Anzahl von mehreren Rücklauf-Temperaturfühlern (18.1, 18.5) zur Erfassung jeweils einer RücklaufTemperatur (T-RL [i]) gekoppelt ist, von denen jeweils ein Rücklauf-Temperaturfühler (18.1, 18.5) an oder in einem Rücklauf-Abzweigkanal (15.1, 15.5) der Rücklauf-Abzweigkanäle (15.1, 15.5) des Rücklauf-Verteilers (12) angeordnet ist, wobei die Anzahl der Rücklauf-Temperaturfühler (18.1, 18.5) ) der Anzahl der Rücklauf-Abzweigkanäle (15.1, 15.5) entspricht, **dadurch gekennzeichnet, dass** es sich bei dem Regler (20, 38) um einen Regler zur Regelung einer Öffnungsstellung des betroffenen Ventils abhängig von dem Wert oder Absolutwert einer Temperatur-Differenz ($\Delta T$ [i]) zwischen einer Ist-Temperatur-Differenz ($\Delta T$-Ist [i]) zwischen der mittels des Vorlauf-Temperaturfühlers (17) erfassten Vorlauf-Temperatur (T-VL) und der jeweils mittels des jeweiligen Rücklauf-Temperaturfühlers erfassten Rücklauf-Temperatur (T-RL [i]) und einer gewünschten Soll-Temperatur-Differenz (AT-Soll [i]) handelt, wobei der Regler konfiguriert ist, das Verfahren nach einem der vorstehenden Ansprüche auszuführen.

5. Vorrichtung nach Anspruch 4, **dadurch gekennzeichnet, dass** der Regler (20, 38) ein programmierbar oder programmierter Microcontroller (38) ist, der mit einer der Anzahl von Stellantrieben (14.1, 14.2, 14.3, 14.4, 14.5) und/oder Ventilen entsprechenden Anzahl an Potentiometern (33) zur Einstellung der jeweiligen Soll-Temperatur-Differenz (AT-Soll [i]) gekoppelt ist.

6. Vorrichtung nach Anspruch 5, **dadurch gekennzeichnet, dass** der Microcontroller (38) mit einem Schalter zur Einstellung einer Vorlauf-Auslegungs-Temperatur (AT-VL) gekoppelt ist oder mit einem in zwei oder mehr Stellungen rastbaren Potentiometer (37) zur Einstellung einer Vorlauf-Auslegungs-Temperatur (AT-VL) gekoppelt ist.

7. Vorrichtung nach einem der Ansprüche 5 oder 6, **dadurch gekennzeichnet, dass** der Microcontroller (38) und die Potentiometer (33) auf einer gemeinsamen Platine (19) angeordnet sind.

8. Vorrichtung nach einem der Ansprüche 4 bis 7, **dadurch gekennzeichnet, dass** entweder jedes Ventil als ein Vorlauf-Ventil dem Vorlauf-Abzweigkanal (13.1, 13.5) zugeordnet ist oder im Bereich des Vorlauf-Abzweigkanals (13.1, 13.5) angeordnet ist, der mittels des jeweils zugeordneten Vorlauf-Ventils öffenbar und wieder verschließbar ist oder jedes Ventil als ein Rücklauf-Ventil dem Rücklauf-Abzweigkanal (15.1, 15.5) zugeordnet ist oder im Bereich des Rücklauf-Abzweigkanals (15.1, 15.5) angeordnet ist, der mittels des jeweils zugeordneten Rücklauf-Ventils öffenbar und wieder verschließbar ist.

**Claims**

1. Method for controlling volumetric flows of a liquid in liquid pipelines (16.1, 16.2, 16.3, 16.4, 16.5) of heating circuits (24.1, 24.2, 24.3, 24.4, 24.5) of a heating and/or cooling system (10) comprising a flow line, a flow-line distributor (11), a return line and a return-line distributor (12), wherein the flow-line distributor (11) comprises a main flow-line channel (43) and a plurality of flow-line-branch channels (13.1, 13.5) flowing into this, to which a liquid pipeline (16.1, 16.2, 16.3, 16.4, 16.5) of a heating circuit (24.1, 24.5) of the heating circuits (24.1, 24.2, 24.3, 24.4, 24.5) is connected with its first pipeline end, which are respectively connected to a return-line branch channel (15.1, 15.5) of a number of a plurality of return-line branch channels (15.1, 15.5) of the return-line distributor (12) with their second pipeline end, which comprises a main return-line channel (44), into which the return-line branch channels (15.1, 15.5) flow, and wherein, to each liquid pipeline (16.1, 16.2, 16.3, 16.4, 16.5) of the respective heating circuit (24.1, 24.2, 24.3, 24.4, 24.5), a valve is assigned, which can be transferred into a first opening position with the aid of a actuator (14.1, 14.2, 14.3, 14.4, 14.5) coupled to it, in which the liquid can flow or flows with a maximum volumetric flow through the liquid pipeline concerned (16.1, 16.2, 16.3, 16.4, 16.5) and can be transferred to a closure position, in which the liquid pipeline concerned (16.1, 16.2, 16.3, 16.4, 16.5) is shut off against liquid flowing through, and wherein the actuator (14.1, 14.2, 14.3, 14.4, 14.5) is controlled by means of a controller (20, 38) depending on a temperature detected by means of at least one temperature sensor (17; 18.1, 18.5) in such a way that a change in the volumetric flow of the liquid through the liquid pipeline concerned (16.1, 16.2, 16.3, 16.4, 16.5) of the heating circuit concerned (24.1, 24.2, 24.3, 24.4, 24.5) is achieved, wherein the controller (20, 38) is coupled with a flow-line temperature sensor (17) arranged on or in the main flow-line channel (43) of the flow-line distributor (11) for detecting a flow-line temperature (T-VL) and is coupled with a number of return-line temperature sensors (18.1, 18.5) for detecting a return-line temperature (T-RL [i]), of which one return-line temperature sensor (18.1, 18.5) is arranged on or in a return-line branch channel (15.1, 15.5) of the return-line branch channels (15.1, 15.5) of the return-line distributor (12), and wherein a number of return-line temperature sensors (18.1, 18.5) corresponding to the number of return-line branch channels (15.1, 15.5) is provided, which are each coupled with the controller (20, 38), and that, by means of the controller (20, 38), an actual temperature difference ($\Delta T$-actual [i]) of the flow-line temperature (T-VL) detected by means of the flow-line temperature sensor (17) and the return-line temperature (T-RL [i]) detected by means of the respective return-line temperature sensor (18.1, 18.5) are respectively calculated and, in each case, this actual temperature difference ($\Delta T$-actual [i]) is compared with a desired target-temperature difference ($\Delta T$-target [i]),

**characterized in that**,

by means of the controller (20, 38), a temperature difference ($\Delta T$ [i]) of the actual temperature difference ($\Delta T$-actual [i]) and the target-temperature difference ($\Delta T$-target [i]) is calculated, wherein, by means of the controller (20, 38), a temperature distance of the actual temperature distance ($\Delta$T-actual [i]) and of the target temperature difference ($\Delta$T-target [i]) is calculated it is detected whether the value of the temperature difference ($\Delta$T [i]) becomes equal to or not equal to zero, wherein the controller (20, 38), if the value of the temperature difference ($\Delta$T [i]) is not zero, then switches on that actuator (14.1, 14.2, 14.3, 14.4, 14.5) that is assigned to the heating circuit concerned (24.1, 24.2, 24.3, 24.4, 24.5) either simultaneously or practically simultaneously or at a configurable time later or a pre-set time later, whereby the valve coupled with this actuator (14.1, 14.2, 14.3, 14.4, 14.5) is either transferred into the first opening position or transferred into a second opening position by means of this actuator (14.1, 14.2, 14.3, 14.4, 14.5) in such a way that then, compared to the volumetric flow of the liquid through the liquid pipeline concerned (16.1, 16.2, 16.3, 16.4, 16.5), immediately before switching on the actuator (14.1, 14.2, 14.3, 14.4, 14.5), a greater volumetric flow of the liquid flows through the liquid pipeline concerned (16.1, 16.2, 16.3, 16.4, 16.5) of the heating circuit concerned (24.1, 24.2, 24.3, 24.4, 24.5), wherein the controller (20, 38) switches off the actuator concerned (14.1, 14.2, 14.3, 14.4, 14.5) again when the value of the temperature difference ($\Delta$T [i]) is again zero, whereby the valve coupled with this actuator (14.1, 14.2, 14.3, 14.4, 14.5) is either transferred into a third opening position, in which a smaller volumetric flow of the liquid through the liquid pipeline concerned (16.1, 16.2, 16.3, 16.4, 16.5) of the heating circuit concerned (24.1, 24.2, 24.3, 24.4, 24.5) or is transferred to the closure position, in which the liquid pipeline concerned (16.1, 16.2, 16.3, 16.4, 16.5) is shut off against liquid flowing through, and that, if the value of the actual temperature difference ($\Delta$T-actual [i]) becomes less than zero, it is detected over an adjustable or pre-set period of time whether the value of the actual temperature difference ($\Delta$T-actual [i]) remains less than zero, and if this is the case, the temperature difference ($\Delta$T [i]) is multiplied by the value -1, whereby the actuator (14.1, 14.2, 14.3, 24.4, 24.5) assigned to the heating circuit concerned (24.1, 24.2, 24.3, 24.4, 24.5) is switched on, whereby the valve coupled to this actuator (14.1, 14.2, 14.3, 14.4, 14.5) is either transferred into the first opening position or is transferred into the second opening position by means of this actuator (14.1, 14.2, 14.3, 14.4, 14.5) in such a way that, in comparison to the volumetric flow of the liquid through the liquid pipeline concerned (16.1, 16.2, 16.3, 16.4, 16.5), immediately before switching on the actuator (14.1, 14.2, 14.3, 14.4, 14.5), a greater volumetric flow of the liquid flows through the liquid pipeline concerned (16.1, 16.2, 16.3, 16.4, 16.5) of the heating circuit concerned (24.1, 24.2, 24.3, 24.4, 24.5).

2. Method according to Claim 1, **characterized in that** then, if the value of the temperature difference ($\Delta$T [i]) is greater than zero, the controller (20, 38) simultaneously or practically simultaneously switches on the actuator (14.1, 14.2, 14.3, 14.4, 14.5), which is assigned to the heating circuit concerned (24.1, 24.2, 24.3, 24.4, 24.5), whereby the valve coupled with this actuator (14.1, 14.2, 14.3, 14.4, 14.5) is either transferred into the first opening position or is transferred into the second opening position by means of this actuator (14.1, 14.2, 14.3, 14.4, 14.5) in such a way that, in comparison to the volumetric flow of the liquid through the liquid pipeline concerned (16.1, 16.2, 16.3, 16.4, 16.5), immediately before switching on the actuator (14.1, 14.2, 14.3, 14.4, 14.5), a greater volumetric flow of liquid flows through the liquid pipeline concerned (16.1, 16.2, 16.3, 16.4, 16.5) of the heating circuit concerned (24.1, 24.2, 24.3, 24.4, 24.5).

3. Method according to one of the Claims 1 or 2, **characterized in that** the flow-line temperature is detected by means of the flow-line temperature sensor (17) and the respective return-line temperature is detected by means of the respective return-line temperature sensor (18.1, 18.5) at certain intervals.

4. Device for carrying out the method according to any one of the above claims, comprising a flow-line distributor (11) and a return-line distributor (12) for a heating and/or cooling system (10) or a heating and/or cooling system (10), wherein the flow-line distributor (11) comprises a main flow-line channel (43) and a plurality of flow-line branch channels (13.1, 13.5) flowing into this, to which a liquid pipeline (16.1, 16.2, 16.3, 16.4, 16.5) of a heating circuit (24.1, 24.5) of the heating circuits (24.1, 24.2, 24.3, 24.4, 24.5) is connected with its first pipeline end, which are respectively connected to a return-line branch channel (15.1, 15.5) of a number of a plurality of return-line branch channels (15.1, 15.5) of the return-line distributor (12), which comprises a main return-line channel (44), into which the return-line branch channels (15.1, 15.5) flow, and wherein, to each liquid pipeline (16.1, 16.2, 16.3, 16.4, 16.5) of the respective heating circuit (24.1, 24.2, 24.3, 24.4, 24.5), a valve is assigned, which valve can be transferred into a first opening position with the aid of an actuator (14.1, 14.2, 14.3, 14.4, 14.5) coupled with it, in which a liquid can flow or flows through the liquid pipeline concerned (16.1, 16.2, 16.3, 16.4, 16.5), and can be transferred into a closed position, in which the liquid pipeline concerned (16.1, 16.2, 16.3, 16.4, 16.5) is blocked against liquid flowing through, and comprising at least one temperature sensor (17; 18.1, 18.5) and a controller (20, 38) for controlling the respective actuator (14.1, 14.2, 14.3, 14.4, 14.5) depending on the temperature detected by means of the at least one temperature sensor (18.1, 18.5) in order to actuate the valve coupled with this by means of the respective actuator (14.1, 14.2, 14.3, 14.4, 14.5) in such a way that a change of the volumetric flow of the liquid through the liquid pipeline concerned (16.1, 16.2, 16.3, 16.4, 16.5) is caused, wherein the controller (20, 38) is coupled with a flow-line temperature sensor (17) arranged on or in the main flow-line channel (43) of the flow-line distributor (11) for detecting a flow-line temperature (T-VL) and coupled with a number of a plurality of return-line temperature sensors (18.1, 18.5) for respectively detecting a return-line temperature T-RL [i]), of which one return-line temperature sensor (18.1, 18.5) is respectively arranged on or in a return-line branch channel (15.1, 15.5) of the return-line branch channels (15.1, 15.5) of the return-line distributor (12), wherein the number return-line temperature sensors (18.1, 18.5) corresponds to the number of the return-line branch channels (15.1, 15.5), **characterized in that** the controller (20, 38) is a controller for regulating an opening position of the valve concerned depending on the value or absolute value of a temperature difference ($\Delta T$ [i]) between an actual temperature difference ($\Delta T$-actual [i]) between the flow-line temperature (T-VL) detected by means of the flow-line temperature sensor (17) and the return-line temperature (T-RL [i]) detected by means of the respective return-temperature sensor and a desired target-temperature difference ($\Delta T$-target [i]), wherein the controller is configured to carry out the method according to any one of the preceding claims.

5. Device according to Claim 4, **characterized in that** the controller (20, 38) is a programmable or programmed microcontroller (38) coupled to a plurality of potentiometers (33) corresponding to the number of actuators (14.1, 14.2, 14.3, 14.4, 14.5) and/or valves to adjust the respective target-temperature difference (L1T target [i]).

6. Device according to Claim 5, **characterized in that** the microcontroller (38) is coupled to a switch for setting a flow-design temperature (AT-VL) or is coupled to a potentiometer (37) that can be locked in two or more positions to set a flow-design temperature (AT-VL).

7. Device according to any one of Claims 5 or 6, **characterized in that** the microcontroller (38) and the potentiometers (33) are arranged on a common PCB (19).

8. Device according to any one of Claims 4 to 7, **characterized in that** either each valve is assigned as a flow-line valve to the flow-line branch channel (13.1, 13.5) or is arranged in the area of the flow-line branch channel (13.1, 13.5), which can be opened and resealed by means of the respectively assigned flow-line valve or each valve is assigned as a return-line valve to the return-branch channel (15.1, 15.5) or is arranged in the area of the return-branch channel (15.1, 15.5), which can be opened and sealed again by means of the respectively assigned return-line valve.

**Revendications**

1. Procédé, destiné à réguler des débits volumétriques d'un liquide dans des canalisations de liquide (16.1, 16.2, 16.3, 16.4, 16.5) de circuits de chauffage (24.1, 24.2, 24.3, 24.4, 24.5) d'un système de chauffage et/ou de refroidissement (10), qui comprend un circuit aller, un collecteur aller (11), un circuit retour et un collecteur retour (12), le collecteur aller (11) comportant un canal principal aller (43) et plusieurs canaux de ramification aller (13.1, 13.5) débouchant dans celui-ci, sur lesquels est raccordée chaque fois par sa première extrémité de canalisation une canalisation de liquide (16.1, 16.2, 16.3, 16.4, 16.5) d'un circuit de chauffage (24.1, 24.5) parmi les circuits de chauffage (24.1, 24.2, 24.3, 24.4, 24.5), qui chaque fois par leur deuxième extrémité de canalisation, sont raccordées sur un canal de ramification retour (15.1, 15.5) d'un nombre de plusieurs canaux de ramification retour (15.1, 15.5) du collecteur retour (12), qui comporte un canal principal retour (44), dans lequel débouchent les canaux de ramification retour (15.1, 15.5), et à chaque canalisation de liquide (16.1, 16.2, 16.3, 16.4, 16.5) du circuit de chauffage (24.1, 24.2, 24.3, 24.4, 24.5) respectif étant associée une soupape qui, à l'aide d'un actionneur (14.1, 14.2, 14.3, 14.4, 14.5) accouplé avec celle-ci est susceptible d'être passée dans une première position d'ouverture, dans laquelle le liquide peut circuler avec un débit volumétrique maximum à travers la canalisation de liquide (16.1, 16.2, 16.3, 16.4, 16.5) concernée, et est susceptible d'être passée dans une position de fermeture, dans laquelle la canalisation de liquide (16.1, 16.2, 16.3, 16.4, 16.5) concernée est obturée à l'encontre d'un passage du liquide, et l'actionneur (14.1, 14.2, 14.3, 14.4, 14.5) étant commandé au moyen d'un régulateur (20, 38) en fonction d'une température détectée au moyen d'au moins une sonde de température (17; 18.1, 18.5), de telle sorte qu'une modification du débit volumétrique du liquide à travers la canalisation de liquide (16.1, 16.2, 16.3, 16.4, 16.5) concernée du circuit de chauffage (24.1, 24.2, 24.3, 24.4, 24.5) concerné soit obtenue, le régulateur (20, 38) étant accouplé avec une sonde de température aller (17), placée sur ou dans le canal principal aller (43) du collecteur aller (11), pour détecter une température aller (T-VL) et avec un nombre de sondes de température retour (18.1, 18.5), destinées à détecter chacune une température retour (T-RL [i]), dont chaque fois une sonde de température retour (18.1, 18.5) est placée sur ou dans un canal de ramification retour (15.1, 15.5) parmi les canaux de ramification retour (15.1, 15.5) du collecteur de retour (12), et un nombre de sondes de température retour (18.1, 18.5) correspondant au nombre de canaux de ramification retour (15.1, 15.5) étant prévu, qui sont accouplées chacune avec le régulateur (20, 38), et en ce qu'au moyen du régulateur (20, 38), chaque fois une température différentielle réelle (ΔT-Ist [i]) de la température aller (T-VL) détectée au moyen de la sonde de température aller (17) et de la température retour (T-RL [i]) détectée au moyen de la sonde de température retour (18.1, 18.5) respective étant calculée et chaque fois ladite température différentielle réelle (ΔT-Ist [i]) étant comparée avec une température différentielle de consigne (ΔT-Soll [i]) souhaitée, **caractérisé**

**en ce qu'**au moyen du régulateur (20, 38), une température différentielle (ΔT [i]) entre la température différentielle réelle (ΔT-Ist [i]) et la température différentielle de consigne (AT-Soll [i]) est calculée, étant détecté au moyen du régulateur (20, 38) si la valeur de la température différentielle (ΔT [i]) est égale à ou différente de zéro, lorsque la valeur de la température différentielle (ΔT [i]) est différente de zéro, le régulateur (20, 38) mettant en route l'actionneur (14.1, 14.2, 14.3, 14.4, 14.5), qui est associé au circuit de chauffage (24.1, 24.2, 24.3, 24.4, 24.5) concerné, soit simultanément ou quasi-simultanément ou après écoulement d'un temps préalablement réglé, suite à quoi, la soupape accouplée avec ledit actionneur (14.1, 14.2, 14.3, 14.4, 14.5) passe au moyen dudit actionneur (14.1, 14.2, 14.3, 14.4, 14.5) soit dans la première position d'ouverture ou passe dans une deuxième position d'ouverture, de sorte qu'un débit volumétrique du liquide supérieur au débit volumétrique du liquide à travers la canalisation de liquide (16.1, 16.2, 16.3, 16.4, 16.5) concernée, directement avant la mise en route de l'actionneur (14.1, 14.2, 14.3, 14.4, 14.5) circule à travers la canalisation de liquide (16.1, 16.2, 16.3, 16.4, 16.5) concernée du circuit de chauffage (24.1, 24.2, 24.3, 24.4, 24.5) concerné, le régulateur (20, 38) remettant à l'arrêt l'actionneur (14.1, 14.2, 14.3, 14.4, 14.5) concerné lorsque la valeur de la température différentielle (ΔT [i]) est de nouveau à zéro, suite à quoi, la soupape accouplée avec ledit actionneur (14.1, 14.2, 14.3, 14.4, 14.5) passe soit dans une troisième position d'ouverture, dans laquelle un débit volumétrique plus faible du liquide circule à travers la canalisation de liquide (16.1, 16.2, 16.3, 16.4, 16.5) concernée du circuit de chauffage (24.1, 24.2, 24.3, 24.4, 24.5) concerné ou passe dans la position de fermeture, dans laquelle la canalisation de liquide (16.1, 16.2, 16.3, 16.4, 16.5) est obturée à l'encontre d'un passage du liquide,

et **en ce que** lorsque la température différentielle réelle (ΔT-Ist [i]) devient inférieure à zéro, il est détecté sur une période réglable ou préalablement réglée si la valeur de la température différentielle réelle (ΔT-Ist [i]) reste inférieure à zéro, et si le cas se présente, la température différentielle (ΔT [i]) est multipliée par la valeur -1, suite à quoi l'actionneur (14.1, 14.2, 14.3, 14.4, 14.5) associé au circuit de chauffage (24.1, 24.2, 24.3, 24.4, 24.5) concerné est mis en route, suite à quoi, la soupape accouplée avec ledit actionneur (14.1, 14.2, 14.3, 14.4, 14.5) passe au moyen dudit actionneur (14.1, 14.2, 14.3, 14.4, 14.5) soit dans la première position d'ouverture ou passe dans la deuxième position d'ouverture, de sorte qu'un débit volumétrique du liquide supérieur au débit volumétrique du liquide à travers la canalisation de liquide (16.1, 16.2, 16.3, 16.4, 16.5), directement avant la mise en route de l'actionneur (14.1, 14.2, 14.3, 14.4, 14.5) circule à travers la canalisation de liquide (16.1, 16.2, 16.3, 16.4, 16.5) concernée du circuit de chauffage (24.1, 24.2, 24.3, 24.4, 24.5) concerné.

2. Procédé selon la revendication 1, **caractérisé en ce que** lorsque la valeur de la température différentielle (ΔT [i]) devient supérieure à zéro, le régulateur (20, 38) met en route simultanément ou quasi-simultanément, l'actionneur (14.1, 14.2, 14.3, 14.4, 14.5) qui est associé au circuit de chauffage (24.1, 24.2, 24.3, 24.4, 24.5) concerné, suite à quoi, la soupape accouplée avec ledit actionneur (14.1, 14.2, 14.3, 14.4, 14.5) passe au moyen dudit actionneur (14.1, 14.2, 14.3, 14.4, 14.5) soit dans la première position d'ouverture ou dans la deuxième position d'ouverture, de sorte qu'un débit volumétrique du liquide supérieur au débit volumétrique du liquide à travers la canalisation de liquide (16.1, 16.2, 16.3, 16.4, 16.5) concernée directement avant la mise en route de l'actionneur (14.1, 14.2, 14.3, 14.4, 14.5) circule à travers la canalisation de liquide (16.1, 16.2, 16.3, 16.4, 16.5) concernée du circuit de chauffage (24.1, 24.2, 24.3, 24.4, 24.5) concerné.

3. Procédé selon l'une quelconque des revendications 1 ou 2, **caractérisé en ce qu'**à des intervalles déterminés, la température aller est détectée au moyen de la sonde de température aller (17) et la température retour respective est détectée au moyen de la sonde de température retour (18.1, 18.5) respective.

4. Dispositif, destiné à réaliser le procédé selon l'une quelconque des revendications précédentes, comprenant un collecteur aller (11) et un collecteur retour (12) pour un système de chauffage et/ou de refroidissement (10) ou d'un système de chauffage et/ou de refroidissement (10), le collecteur aller (11) comportant un canal principal aller (43) et plusieurs canaux de ramification aller (13.1, 13.5) débouchant dans celui-ci, sur lesquels est raccordée chaque fois par sa première extrémité de canalisation une canalisation de liquide (16.1, 16.2, 16.3, 16.4, 16.5) d'un circuit de chauffage (24.1, 24.5) parmi les circuits de chauffage (24.1, 24.2, 24.3, 24.4, 24.5), qui chaque fois par leur deuxième extrémité de canalisation, sont raccordées sur un canal de ramification retour (15.1, 15.5) d'un nombre de plusieurs canaux de ramification retour (15.1, 15.5) du collecteur retour (12), qui comporte un canal principal retour (44), dans lequel débouchent les canaux de ramification retour (15.1, 15.5), et à chaque canalisation de liquide (16.1, 16.2, 16.3, 16.4, 16.5) du circuit de chauffage (24.1, 24.2, 24.3, 24.4, 24.5) respectif étant associée une soupape qui, à l'aide d'un actionneur (14.1, 14.2, 14.3, 14.4, 14.5) accouplé avec celle-ci est susceptible d'être passée dans une première position d'ouverture, dans laquelle un liquide peut circuler ou circule à travers la canalisation de liquide (16.1, 16.2, 16.3, 16.4, 16.5) concernée, et est susceptible d'être passée dans une position de fermeture, dans laquelle la canalisation de liquide (16.1, 16.2, 16.3, 16.4, 16.5) concernée est obturée à l'encontre d'un passage du liquide, et comprenant au moins une sonde de température (17 ; 18.1, 18.5) et un régulateur (20, 38), destiné à commander l'actionneur (14.1, 14.2, 14.3, 14.4, 14.5) respectif en fonction d'une température détectée au moyen de l'au moins une sonde de température (18.1, 18.5), pour manœuvrer au moyen de l'actionneur (14.1, 14.2, 14.3, 14.4, 14.5) respectif la soupape qui est accouplée avec celui-ci, de telle sorte qu'une modification d'un débit volumétrique du liquide à travers la canalisation de liquide (16.1, 16.2, 16.3, 16.4, 16.5) concernée puisse être provoquée, le régulateur (20, 38) étant accouplé avec une sonde de température aller (17) placée sur ou dans le canal principal aller (43) du collecteur aller (11), pour la détection d'une température aller (T-VL) et avec un nombre de plusieurs sondes de température retour (18.1, 18.5) pour la détection de chaque fois une température retour (T-RL [i]), dont chaque fois une sonde de température retour (18.1, 18.5) est placée sur ou dans un canal de ramification retour (15.1, 15.5) parmi les canaux de ramification retour (15.1, 15.5) du collecteur retour (12), le nombre des sondes de température retour (18.1, 18.5) correspondant au nombre de canaux de ramification retour (15.1, 15.5), **caractérisé en ce que** le régulateur (20, 38) est un régulateur destiné à la régulation d'une position d'ouverture de la soupape concernée en fonction de la valeur ou de la valeur absolue d'une température différentielle ($\Delta$T [i]) entre une température différentielle réelle ($\Delta$T-Ist [i]) entre la température aller (T-VL) détectée au moyen de la sonde de température aller (17) et la température retour (T-RL [i]) détectée chaque fois au moyen de la sonde de température retour respective et une température différentielle de consigne (AT-Soll [i]), le régulateur étant configuré pour réaliser le procédé selon l'une quelconque des revendications précédentes.

5. Dispositif selon la revendication 4, **caractérisé en ce que** le régulateur (20, 38) est un microcontrôleur (38) programmable ou programmé, qui est accouplé avec un nombre de potentiomètres (33) correspondant au nombre d'actionneurs (14.1, 14.2, 14.3, 14.4, 14.5) et/ou de soupapes, pour le réglage de la température différentielle de consigne (AT-Soll [i]) respective.

6. Dispositif selon la revendication 5, **caractérisé en ce que** le microcontrôleur (38) est accouplé avec un interrupteur destiné au réglage d'une température aller nominale (AT-VL) ou avec un potentiomètre (37) enclenchable dans deux positions ou plus, destiné au réglage d'une température aller nominale (AT- VL).

7. Dispositif selon l'une quelconque des revendications 5 ou 6, **caractérisé en ce que** le microcontrôleur (38) et les potentiomètres (33) sont placés sur une carte de circuit imprimé (19) commune.

8. Dispositif selon l'une quelconque des revendications 4 à 7, caractérisé en ce soit chaque soupape en tant qu'une soupape aller est associée au canal de ramification aller (13.1, 13.5) ou est placée dans la zone du canal de ramification aller (13.1, 13.5), qui est susceptible d'être ouvert et de nouveau fermé au moyen de la soupape aller respectivement associée, ou chaque soupape en tant qu'une soupape retour est associée au canal de ramification retour (15.1, 15.5) ou est placée dans la zone du canal de ramification retour (15.1, 15.5), qui est susceptible d'être ouvert et de nouveau fermé au moyen de la soupape retour respectivement associée.

Fig. 1

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2018162679 A1

- EP 2871539 A1